(19) Europäisches Patentamt
European Patent Office
Office européen des brevets

(11) **EP 2 230 784 A1**

(12) **EUROPÄISCHE PATENTANMELDUNG**

(43) Veröffentlichungstag:
**22.09.2010 Patentblatt 2010/38**

(51) Int Cl.:
*H04J 3/16* (2006.01)　　*H04N 7/24* (2006.01)
*H04H 20/57* (2008.01)

(21) Anmeldenummer: **09003963.7**

(22) Anmeldetag: **19.03.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(71) Anmelder:
• **Fraunhofer-Gesellschaft zur Förderung der angewandten Forschung e.V.**
  **80686 München (DE)**
• **Friedrich-Alexander-Universität Erlangen-Nürnberg**
  **91054 Erlangen (DE)**

(72) Erfinder:
• **Forster, Christian**
  **90403 Nürnberg (DE)**

• **Mull, Andreas**
  **90482 Nürnberg (DE)**
• **Doehla, Stephan**
  **91058 Erlangen (DE)**
• **Gerhäuser, Heinz**
  **91058 Erlangen (DE)**
• **Heuberger, Albert**
  **91058 Erlangen (DE)**

(74) Vertreter: **Zimmermann, Tankred Klaus et al**
**Schoppe, Zimmermann, Stöckeler & Zinkler**
**Patentanwälte**
**Postfach 246**
**82043 Pullach bei München (DE)**

(54) **Vorrichtung und Verfahren zur Übertragung einer Mehrzahl von Informationssignalen in einem flexiblen Zeitmultiplex**

(57)　Es wird zunächst auf eine exakte Datenraten-analyse der in einem nachfolgenden Übertragungszyklus per Zeitmultiplex zu übertragenden Informationssignalabschnitte verzichtet. Stattdessen werden, basierend auf möglichst exakten Schätzwerten für die nachfolgenden Datenraten, in einem aktuellen Übertragungszyklus Schätzwerte für relative Wartezeiten (Delta-T) vom aktuellen Zeitschlitz zum nachfolgenden Zeitschlitz desselben Dienstes übertragen. In dem nachfolgenden Übertragungszyklus können tatsächliche Datenraten eingestellt werden, die von den geschätzten Datenraten für die einzelnen Informationssignale abweichen können, wodurch sich vorhergesagte Zeitschlitzgrenzen für den nachfolgenden Übertragungszyklus verschieben können. Die mögliche Verschiebung der Zeitschlitzgrenzen unterliegt jedoch einigen Randbedingungen. Kein Zeitschlitz des nachfolgenden Übertragungszyklus kann vor seinem signalisierten geschätzten Startzeitpunkt beginnen. Bei konstanten Datenraten sind geschätzte Zeitschlitzstruktur und tatsächliche Zeitschlitzstruktur identisch, so dass in diesem Fall das vorgestellte Konzept Vorteile und Effizienz des Time-Slicing ausnutzt.

FIG 1

**Beschreibung**

Die vorliegende Erfindung bezieht sich auf ein Konzept zur Übertragung einer Mehrzahl von Informationssignalen in einem statistischen Multiplexverfahren, insbesondere in einem statistischen Zeitmultiplexverfahren, wie es beispielsweise bei der Übertragung von audiovisuellen Inhalten in einem digitalen Videorundfunksystem eingesetzt werden kann.

Bei einem DVB-H-System (DVB-H = Digital Video Broadcasting-Handhelds, digitaler Videorundfunk für Handgeräte) können in einem Transportstrom über einen Übertragungskanal mit quasi-konstanter Bit- bzw. Datenrate mehrere Multimediadienste, insbesondere digitale Videosignale, im Zeitmultiplex übertragen werden. Wird dabei jedem Videosignal, entsprechend einem encodierten Informationssignal, eine feste Daten- bzw. Kodierrate zugewiesen, so ist beispielsweise ein Programmanbieter zu einem Kompromiss zwischen zum Teil kostspieliger Übertragungskapazität und bei kritischen Szenen erreichbarer Bildqualität gezwungen. Gelegentlich reicht dabei eine Daten- bzw. Komprimierungsrate nicht aus, und es kann bei detailreichen Szenen zu Qualitätseinbußen kommen. Andererseits kann es bei einer fest zugewiesen Kodierrate auch dazu kommen, dass die zugewiesene Kodierrate über einer für eine aktuelle Szene notwendigen Kodierrate liegt und damit Kodierrate bzw. Kosten verschwendet werden.

Abhängig von einem aktuellen Bildinhalt benötigt ein Video-Encoder unterschiedlich hohe Daten- bzw. Kodierraten, um beispielsweise eine Fernsehübertragung mit guter Qualität zu gewährleisten. So erfordert eine Sportübertragung aufgrund bewegungsintensiver Bildinhalte typischerweise eine höhere Datenrate als beispielsweise eine Talkshow oder eine Nachrichtensendung mit eher statischen Bildinhalten. Besonders hohe Datenraten werden für eine Übertragung detailreicher Szenen mit viel Bewegung benötigt.

Videocodierungs- bzw. -komprimierungsverfahren basieren beispielsweise auf Prädiktionen, wie z. B. die so genannten hybriden Codierer, die für ein Bild eine bewegungskompensierte oder innerbildliche Prädiktion mit anschließender beispielsweise entropiebasierter Kompression des Prädiktionsrests durchführen. D. h., es werden Ähnlichkeiten innerhalb eines Bildes (intra) und/oder unter den Bildern (inter) zur Vorhersage ausgenutzt. Diese Prädiktionen funktionieren je nach Bildinhalt unterschiedlich gut. Das Restsignal fällt demnach höher oder kleiner aus, je nach Güte der Prädiktion. Ein höheres Restsignal benötigt eine höhere Anzahl an Bits zur Codierung. Umgekehrt benötigt auch die Codierung der Bewegungskompensation als Seiteninformation Bits zur Codierung, so dass eine komplexere Prädiktion nicht notwendigerweise zu einer verbesserten Kompressionsrate führt. Insgesamt kann für verschiedene zur Verfügung stehende Datenraten und dadurch für verschiedene Kompressionsraten eine optimale Bildqualität bzw. ein optimaler Kompromiss zwischen Rate und Qualität gefunden werden. Dieser Zusammenhang zwischen zur Verfügung stehender Rate und erzielbarer Bildqualität ist signalabhängig. Daher wird für unterschiedliche Szenen bei gleicher subjektiver Bildqualität eine unterschiedliche Komprimierungsrate bzw. Datenrate zur Codierung benötigt.

Je größer eine Programmanzahl bzw. eine Anzahl von Programmanbietern, desto unwahrscheinlicher ist es, dass alle Programme gleichzeitig eine sehr hohe Datenrate für ihre Encodierung benötigen. Werden in einem Transportstrom über einen Kanal mit konstanter Gesamtdatenrate mehrere Informationssignale, insbesondere Videos, übertragen, können diese Datenratenunterschiede bei einer Datenratenzuweisung zu den einzelnen Diensten ausgenutzt werden.

Dazu können die einzelnen Datenraten ein DVB-H-Netzwerk dynamisch, gemäß einem so genannten statistischen Multiplex, konfiguriert werden. Dabei erfolgt die Verteilung der Datenraten, so dass ein Kodierraten-zu-Bildqualitätsverhältnis optimal wird. Dieses Verfahren ist kooperativ und erfordert, dass eine Datenratensumme der Einzeldienste immer unter der zur Verfügung stehenden Gesamtdatenrate verbleibt. Anstatt jedem Informationssignal eine feste Datenrate zuzuteilen, analysiert der statistische Multiplex Inhalte des zu übertragenden Bildmaterials und weist der Mehrzahl von Informationssignalen für eine gemeinsame Übertragung in einem Transportstrom über den Kanal mit konstanter Gesamtdatenrate unterschiedliche Einzeldatenraten, je nach Prädiktionseigenschaften, zu. Anstatt jedem Video eine maximal nötige Datenrate zuzuweisen, kann man so mit einer deutlich geringeren durchschnittlichen Datenrate pro Video arbeiten, ohne dabei die wahrgenommene Bildqualität zu mindern. Eine Gesamtqualitätsstörung kann dadurch also gemindert werden.

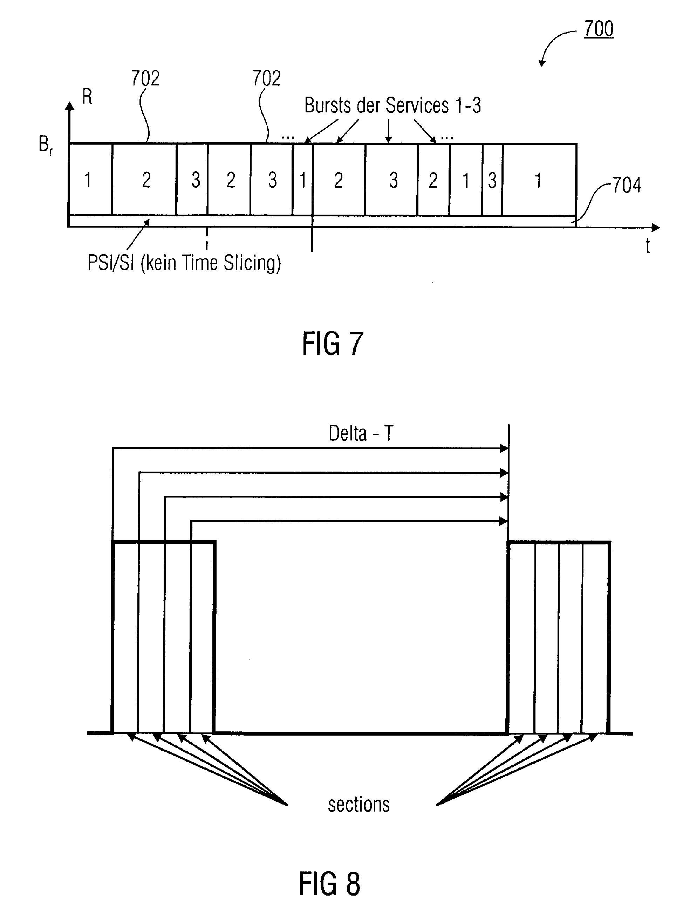

Ein Empfang von Videos bzw. Informationssignalen auf einem mobilen Endgerät, wie beispielsweise einem DVB-H-Empfänger, sollte natürlich nicht dazu führen, dass dessen Batterie in kürzester Zeit entladen wird. Bei DVB-T-Systemen (DVB-T = Digital Video Broadcasting-Terrestrial) muss stets ein gesamter Datenstrom decodiert werden, bevor ein Zugriff auf einen der in dem Datenstrom enthaltenen Dienste, wie beispielsweise Fernsehprogramme, geschehen kann. Bei DVB-H bedient man sich der so genannten "Time-Slicing"-Technik, bei der nur ein Teil bzw. ein Zeitschlitz des Datenstroms empfangen wird, der Daten eines gerade ausgewählten Diensts bzw. Programms beinhaltet. Das Zusammenfügen bzw. Multiplexing verschiedener Dienste erfolgt bei DVB-H also im reinen Zeitmultiplex, bei dem Informationssignale jedes Dienstes periodisch in komprimierten Datenpaketen bzw. Zeitschlitzen (engl. time slices) gesendet werden. Ein einzelner Dienste wird also nicht kontinuierlich abgestrahlt, sondern lediglich zeitweise mit einer entsprechend hohen Datenrate und zwischenzeitlich überhaupt nicht. Das zeitliche Multiplexen mehrerer Dienste ergibt dann wieder einen kontinuierlichen Datenstrom mit quasikonstanter Datenrate, wie es beispielhaft in Fig. 7 gezeigt ist.

Fig. 7 zeigt einen kontinuierlichen Datenstrom 700 mit konstanter mittlerer Datenrate $B_R$. Der Datenstrom 700 stellt einen aus MPEG-2-kompatiblen (MPEG = Moving Picture Experts Group, "Expertengruppe für bewegte Bilder") Elementardatenströmen, die in Zeitschlitze 702 organisiert sind, zusammengesetzten MPEG-Transportstrom dar. Aus Fig. 7 wird deutlich, dass programmspezifische Informationen und Metadaten 704 (PSI/SI) nicht dem Zeitschlitzverfahren unterworfen werden. Außerdem ist weder eine feste, z. B. sich wiederholende, Zuweisung der einzelnen Dienste zu Zeitschlitzen 702 noch eine feste Größe bzw. Dauer derselben vorgeschrieben, obwohl in vielen DVB-H Multiplexen dennoch eine derartige feste Struktur verwendet wird. Die Dauer eines einem Informationssignal zugeordneten Zeitschlitzes 702 hängt im Allgemeinen von der Größe der aktuellen Datenpakete des jeweiligen Diensts ab, welche in besagtem Zeitschlitz übertragen werden sollen. Erfordert beispielsweise ein Videosignal momentan eine vergleichsweise hohe Kodierrate, so wird der dem Videosignal zuordenbare Zeitschlitz 702 eine entsprechend hohe Zeitdauer aufweisen.

Aufgrund der in Fig. 7 dargestellten variablen Zeitschlitzstruktur muss einem Empfänger des Datenstroms 700 die genaue Position und Konfiguration der Zeitschlitze 702 übermittelt werden, so dass daraus der sequentielle Datenfluss der einzelnen Rundfunkdienste rekonstruiert werden kann. Für DVB-H wird hierzu die so genannte Delta-T-Methode verwendet. Hierbei wird in jedem Zeitschlitz 702 eine relative Wartezeit Delta-T übertragen, die dem Empfänger mitteilt, wann der nächste Zeitschlitz des gleichen Diensts empfangbar ist. Das System erlaubt dabei die Signalisierung von Wartezeiten in einem Bereich weniger Millisekunden bis zu ca. 30 Sekunden (siehe Fig. 8).

Im Empfänger werden eingehende Zeitschlitze 702 gepuffert und dann mit konstanter Rate (der mittleren Daten- bzw. Codierungsrate des jeweiligen Diensts) ausgelesen. Die Dauer der Zeitschlitze 702 liegt typischerweise in einem Bereich einiger Hundert Millisekunden, wohingegen die Abschaltzeit, entsprechend Delta-T, des Empfängers zwischen den Zeitschlitzen viele Sekunden betragen kann (siehe oben). Je nach Verhältnis von An-/Auszeit kann sich eine Leistungsersparnis von mehr als 90% gegenüber DVB-T ergeben. Time-Slicing setzt dazu eine ausreichende Anzahl von Diensten bzw. Informationssignalen voraus, um möglichst effektiv zu sein.

In einem DVB-H-System werden Informationssignale bzw. Dienste auf Basis des Internetprotokolls (IP) übertragen. Dieser Ansatz ermöglicht eine einfache Verknüpfung mit anderen Netzwerken. Der MPEG-2-Transportstrom 700 dient als physikalischer Träger. Eine Einbettung von IP-Daten in dem Transportstrom geschieht mit Hilfe eines bestehenden Anpassungsprotokolls, der so genannten Multiprotokollkapselung bzw. Multi Protocol Encapsulation (MPE). Um den Transportstrom 700 vor störenden Einwirkungen eines Funkkanals zu schützen, wird in DVB-H zusätzlich auf einen Fehlerschutz (MPE-FEC) zurückgegriffen, welcher auf der Ebene des IP-Datenstroms angewendet wird, bevor die IP-Daten per MPE eingekapselt werden. Durch diesen Mechanismus soll die Empfangsleistung generell verbessert werden, insbesondere die Zuverlässigkeit beim mobilen Empfang und bei starken impulsförmigen Störungen, wie sie beispielsweise durch Mehrwegeausbreitung und daraus folgenden destruktiven Interferenzen am Empfangsort auftreten können.

MPE-FEC ist in direkter Nachbarschaft zum Time-Slicing und zur MPE angesiedelt. Diese drei Techniken sind unmittelbar aufeinander abgestimmt und bilden zusammen den so genannten DVB-H-Codec. IP-Datenströme aus den verschiedenen Quellen werden als einzelne Elementarströme nach der Time-Slicing Methode gemultiplext. Der Fehlerschutz MPE-FEC wird getrennt für jeden einzelnen Elementarstrom berechnet und zugefügt. Danach folgt die Einkapselung der IP-Pakete in die so genannten Sections der Multi Protocol Encapsulation und daraufhin die Einbettung in den Transportstrom.

Hinsichtlich des zeitlichen Verhaltens besteht der Nachteil der Delta-T-Methode nun darin, dass die Daten- bzw. Kodierrate eines DVB-H Diensts nur für die zukünftigen Zeitschlitze des jeweiligen Diensts geändert werden kann. Es ergibt sich eine algorithmische Verzögerung, die dem Abstand der Zeitschlitze der einzelnen Dienste entspricht. Im Falle konstantratiger Dienste ist dieser Nachteil nicht relevant. In diesem Fall können die Nutzdaten der Dienste sofort eingekapselt und zu Zeitschlitzs/Zeitschlitzen zusammengefasst werden.

Anders verhält es sich dagegen bei Diensten, die eine variable Daten-/Kodierrate, wie beispielsweise beim statistischen Multiplex, nutzen. Aufgrund der versetzten Signalisierung müssen solche Dienste entsprechend der Wiederholrate der zugewiesenen Zeitschlitze verzögert werden. Um in den Zeitschlitzen eines momentanen bzw. aktuellen Übertragungszyklus die jeweiligen relativen Wartezeiten Delta-T bis zu den entsprechenden Zeitschlitzen des nachfolgenden Übertragungszyklus angeben zu können, muss idealerweise eine Zeitschlitzstruktur, d.h. Zeitschlitzstartzeitpunkte und/ oder Zeitschlitzdauern, des nachfolgenden Übertragungszyklus bereits erkannt sein. Schließlich können sich die Datenratenanforderungen eines Diensts von Zeitschlitz zu Nachfolgezeitschlitz ändern, wodurch sich für den nachfolgenden Übertragungszyklus eine völlig andere Zeitschlitzstruktur ergeben kann als im aktuellen Übertragungszyklus.

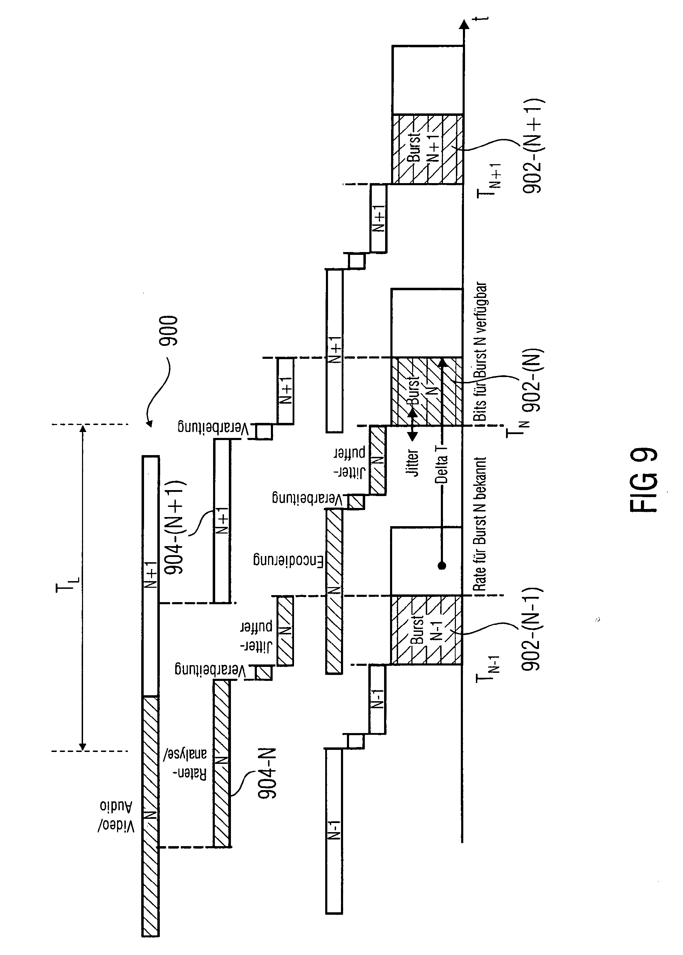

Um zukünftige Datenratenanforderungen bzw. Kodierratenanforderungen und damit die nachfolgende Zeitschlitzstruktur zu kennen, müssen bei einem statistischen Multiplex die Informationssignale bereits vorab analysiert werden. Dies kann zu erheblichen Latenzzeiten führen. Eine Illustration dieses Sachverhalts zeigt das Zeitdiagramm aus Fig. 9.

Fig. 9 zeigt einen zeitlichen Verarbeitungsablauf eines senderseitig für einen Dienst eingehenden Elementarstroms 900. Der Datenstrom 900 ist in Abschnitte N-1, N, N+1 aufgeteilt. Dabei sollen die Daten des Abschnittes N in einem Zeitschlitz 902-N und die Daten des Abschnitts N+1 in einem nachfolgenden Zeitschlitz 902-(N+1) übertragen werden. Aus Fig. 9 lässt sich erkennen, dass eine Datenratenanalyse 904-(N+1) für den Datenstromabschnitt N+1 bereits dann fertig gestellt sein muss, wenn der Zeitschlitz mit den Daten des jeweils zeitlich vorangehenden Abschnitts gesendet wird, d.h. Zeitschlitz 902-N. Dies ist darauf zurückzuführen, dass, wie oben bereits beschrieben wurde, in dem Zeitschlitz 902-N die relative Wartezeit bis zum nachfolgenden Zeitschlitz 902-(N+1) integriert wird. Somit muss die Datenrateanalyse für Abschnitts N bereits zum Zeitschlitzstartzeitpunkt $T_{N-1}$ des Zeitschlitzes 902-(N-1), die Datenratenanalyse des Abschnitts N+1 bereits zum Zeitschlitzstartzeitpunkt $T_N$ des Zeitschlitzes 902-N usw. abgeschlossen sein. Daraus ergibt sich eine relativ große Latenzzeit $T_L$ zwischen Eintreffen der Datenabschnitte N, N+1 des Elementarstroms 900 und den entsprechenden Ausspielzeitpunkten bzw. Zeitschlitzstartzeitpunkten $T_N$ bzw. $T_{N+1}$.

Die soeben beschriebene hohe Latenzzeit $T_L$ steht an sich im Widerspruch zu den Zielen des statistischen Multiplexes.

Die Aufgabe der vorliegenden Erfindung besteht somit darin, ein Konzept bereitzustellen, das gegenüber dem Stand der Technik reduzierte Latenzzeiten zwischen Dateneingang und Ausspielzeitpunkt ermöglicht. Dabei sollte das bereitgestellte Konzept auch die Energieeffizienz des Empfängers verbessern.

Die Aufgabe wird gelöst durch eine Vorrichtung mit den Merkmalen des Patentanspruchs 1 und ein Verfahren nach Patentanspruch 14.

Die Erkenntnis der vorliegenden Erfindung besteht darin, dass die oben gestellte Aufgabe gelöst werden kann, indem zunächst auf eine exakte Datenratenanalyse bzw. Kodierratenanalyse der in einem nachfolgenden Übertragungszyklus zu übertragenden Informationssignalabschnitte verzichtet wird und stattdessen, basierend auf möglichst exakten Schätzwerten für diese nachfolgenden Daten- bzw. Kodierraten, in den Zeitschlitzen eines aktuellen Übertragungszyklus Schätzwerte für die relativen Wartezeiten (Delta-T) übertragen werden. In dem nachfolgenden Übertragungszyklus können tatsächliche Daten- bzw. Kodierraten eingestellt werden, die von den geschätzten Datenraten für die einzelnen Informationssignale abweichen können, wodurch sich die vorhergesagten Zeitschlitzgrenzen für den nachfolgenden Übertragungszyklus jedoch verschieben können. Die mögliche Verschiebung der Zeitschlitzgrenzen bzw. der Zeitschlitzstartzeitpunkte unterliegt jedoch einigen Randbedingungen. Wichtig ist, dass kein Zeitschlitz des nachfolgenden Übertragungszyklus vor seinem signalisierten geschätzten Startzeitpunkt beginnt. Somit kann zum einen sichergestellt werden, dass ein Empfänger den für ihn bestimmten Zeitschlitz nicht "verpasst". Zum anderen kann durch möglichst exakte Schätzung der Zeitschlitzstruktur erreicht werden, dass ein Zeitschlitz nicht wesentlich später anfängt, als vorher signalisiert wurde, wodurch Empfangsleistung eingespart werden kann, da der Empfänger seinen Empfangszeitpunkt nicht auf Verdacht vorverlegen muss. Dies trifft vor allem für nur relativ langsam veränderliche Daten- bzw. Kodierraten der einzelnen Dienste zu. Bei konstanten Datenraten sind geschätzte Zeitschlitzstruktur und tatsächliche Zeitschlitzstruktur sogar identisch, so dass in diesem Fall das vorgestellte Konzept die Vorteile und die Effizienz des Time-Slicing komplett ausnutzt.

Noch allgemeiner kann man sagen, dass bei von Übertragungszyklus zu Übertragungszyklus für alle Informationssignale konstant bleibenden Eingangsgrößen für einen Datenratenschätzer, wie beispielsweise den Informationssignalen selbst und/oder einem Kodierrate-zu-Qualitäts-Verhältnis und/oder einem Kodierrate-zu-Datenratenkosten-Verhältnis, die ermittelten Schätzwerte für die relativen Wartezeiten mit tatsächlichen Wartezeiten übereinstimmen, so dass ein daraus abgeleiteter geschätzter Zeitschlitzstartzeitpunkt und ein tatsächlicher Zeitschlitzstartzeitpunkt des nachfolgenden Übertragungszyklus genau aufeinander fallen. In diesem Fall wird also empfangsseitig keine Leistung durch zu frühes Einschalten des Empfängers verschwendet.

Eine zeitliche Dauer der ankommenden Informationssignalabschnitte zusammen mit geschätzten bzw. tatsächlichen Kodierraten ergibt, gleichbedeutend, jeweils geschätzte bzw. tatsächliche Datenmengen, die in den verschiedenen Zeitschlitzen übertragen werden. Somit kann auch von einer Schätzung von Datenmengen und einer Ermittlung von tatsächlichen Datenmengen gesprochen werden.

Die Umverteilung von Datenraten zwischen den unterschiedlichen Zeitschlitzen eines Übertragungszyklus erfolgt abhängig von momentan tatsächlich benötigten Datenraten für die einzelnen Dienste sowie abhängig von Kosten für die Datenraten. Diese Kosten können technische Kosten, wie beispielsweise Rechenleistung, aber auch Geldkosten sein. Diese Abhängigkeit ist notwendig, da sonst jeder Dienst versuchen würde, seinen Zeitschlitz, abweichend von der jeweiligen Schätzung, so weit wie möglich zu verlängern, um für sich den meisten Nutzen herauszuschlagen. D. h., in der Realität kann von einer uneingeschränkten Kooperation der Diensteanbieter nicht ausgegangen werden, weshalb Datenratenkosten einen Anreiz bieten, Datenraten bzw. Zeitschlitzlängen je nach Bedarf zu verkleinern oder zu vergrößern. Es ist anzumerken, dass bei der Umverteilung alle Zeitschlitze quasi gleichberechtigt sind, d. h. , jedem Zeitschlitz stehen, unabhängig von seiner Position in der Zeitschlitzstruktur, dieselben Möglichkeiten bzw. Freiheitsgrade bei der Umverteilung zur Verfügung, wie den anderen Zeitschlitzen.

Ausführungsbeispiele der vorliegenden Erfindung schaffen eine Vorrichtung zur Übertragung einer Mehrzahl von Informationssignalen in einer Mehrzahl von aktuellen und nachfolgenden Zeitschlitzen in einem aktuellen und einem nachfolgenden Übertragungszyklus gemäß einem Zeitmultiplex. Die erfindungsgemäße Vorrichtung umfasst einen Schätzer, der ausgebildet ist, um für jedes der Informationssignale eine Datenrate zu schätzen, mit der das Informationssignal in einem dem aktuellen Zeitschlitz nachfolgenden Zeitschlitz voraussichtlich encodiert wird, um eine geschätzte Zeitschlitzstruktur für den nachfolgenden Übertragungszyklus zu erhalten. Ferner umfasst die Vorrichtung einen Prozessor, der ausgebildet ist, um für jedes der Informationssignale, basierend auf der geschätzten Zeitschlitzstruktur, eine relative Wartezeit zu ermitteln, die auf einen geschätzten Startzeitpunkt des nachfolgenden Zeitschlitzes des Informationssignals hindeutet. Ein Zeitschlitz-Strukturierer ist vorgesehen, der ausgebildet, um jeden der nachfolgenden Zeitschlitze einen tatsächlichen Startzeitpunkt basierend auf einer tatsächlichen Datenrate für das Informationssignal zuzuweisen, um eine tatsächliche Zeitschlitzstruktur zu erhalten, wobei die tatsächliche Datenrate von einer in dem aktuellen Übertragungszyklus von dem Datenratenschätzer geschätzten Datenrate abweichen kann. Dabei ist der Zeitschlitz-Strukturierer ausgebildet, um die tatsächlichen Startzeitpunkte der nachfolgenden Zeitschlitze größer als oder gleich dem jeweils geschätzten Startzeitpunkt zu wählen.

Bei nur langsam veränderlichen Datenraten bzw. bei guter Übereinstimmung von geschätzten und tatsächlichen Datenraten sind geschätzte und tatsächliche Zeitschlitzstruktur nahezu identisch. Bei konstanten Datenraten bzw. bei exakter Übereinstimmung von geschätzten und tatsächlichen Datenraten sind geschätzte und tatsächliche Zeitschlitzstruktur identisch, so dass ein Empfänger maximal leistungseffizient arbeiten kann. D. h., je besser der Schätzer, desto geringer sind die Abweichungen zwischen geschätzten und tatsächlichen Werten, so dass ein Empfänger nicht bzw. nur unwesentlich vor einem Zeitschlitz eingeschaltet wird.

Somit können durch die vorliegende Erfindung die Vorteile des statistischen Multiplexes mit den Vorteilen des Time-Slicing und der Delta-T-Methode kombiniert werden, ohne an einem Empfänger, der sich auf die Richtigkeit der signalisierten Delta-T-Werte verlässt, unnötig viel Empfangsleistung zu verschenken.

Vorteilhafte Weiterbildungen der vorliegenden Erfindung sind Gegenstand der abhängigen Ansprüche.

Ausführungsbeispiele der vorliegenden Erfindung werden nachfolgend Bezug nehmend auf die beiliegenden Zeichnungen näher erläutert. Es zeigen:

Fig. 1    ein Verfahren zur Übertragung einer Mehrzahl von Informationssignalen in einem flexiblen Zeitmul- tiplex gemäß einem Ausführungsbeispiel der vor- liegenden Erfindung;

Fig. 2    eine schematische Darstellung einer Mehrzahl von Informationssignalen in einem flexiblen Zeitmul- tiplex gemäß einem Ausführungsbeispiel der vor- liegenden Erfindung;

Fig. 3    ein Blockdiagramm einer Vorrichtung zur Übertra- gung einer Mehrzahl von Informationssignalen in einem flexiblen Zeitmultiplex gemäß einem Ausfüh- rungsbeispiel der vorliegenden Erfindung;

Fig. 4    eine schematische Darstellung einer Verschiebung von Zeitschlitz-Startzeitpunkten;

Fig. 5    eine schematische Darstellung eines flexiblen Multiplexsystems gemäß einem Ausführungsbeispiel der vorliegenden Erfindung;

Fig. 6    ein Zeitablaufdiagramm eines flexiblen Multiplex- verfahrens gemäß einem Ausführungsbeispiel der vorliegenden Erfindung;

Fig. 7    ein Beispiel für einen Aufbau eines DVB-H Multip- lex;

Fig. 8    Delta-T-Signalisierung aus der Europäischen Telekommunikationsnorm ETSI EN 302 304; und

Fig. 9    ein Beispiel für einen zeitlichen Ablauf eines Dienstes mit variabler Datenrate in einem her- kömmlichen statistischen Multiplex.

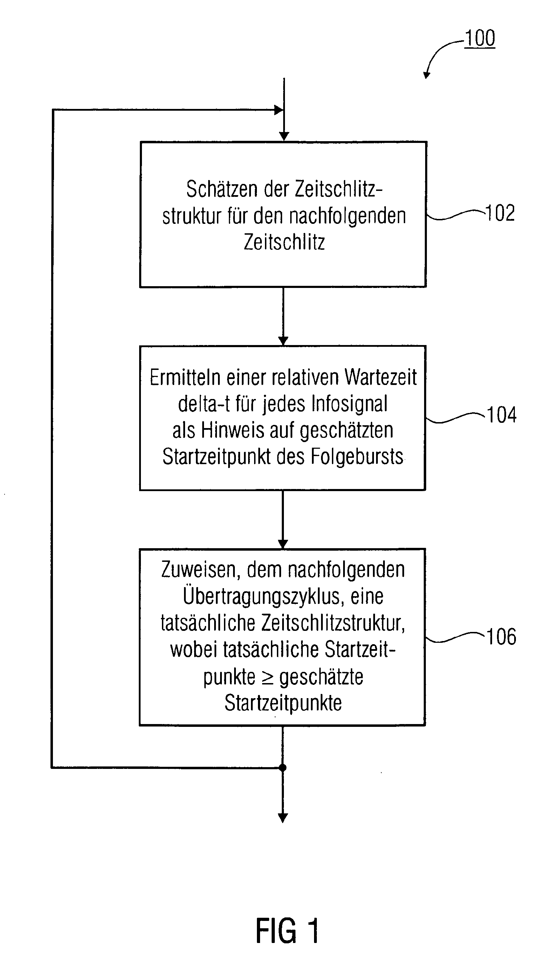

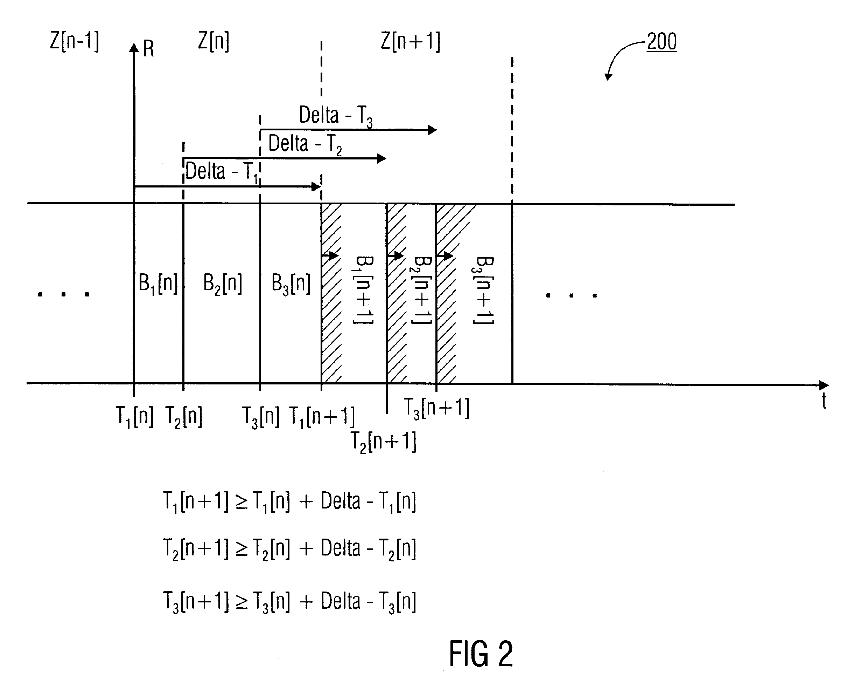

Zunächst soll anhand der Fig. 1 und 2 das grundlegende Konzept der vorliegenden Erfindung beschrieben werden. Dazu zeigt Fig. 1 ein schematisches Ablaufdiagramm eines erfindungsgemäßen Verfahrens 100 zur Übertragung einer Mehrzahl von Informationssignalen gemäß einem statistischen Zeitmultiplex. Die einzelnen Verfahrensschritte des Verfahrens 100 gemäß Fig. 1 werden nun unter Zuhilfenahme von Fig. 2 näher erläutert.

Es wird von einem Transportstrom 200 ausgegangen, in dem Zeitschlitze $B_i[.]$ (i=1,...,I) von einer Mehrzahl I von Diensteanbietern in einem Zeitmultiplex angeordnet sind bzw. übertragen werden. Die Zeitschlitze $B_i[.]$ sind in aufeinander folgenden Übertragungszyklen {...,Z[n-1],Z[n],Z[n+1],...} angeordnet.

In einem ersten Schritt 102 des in Fig. 1 dargestellten erfindungsgemäßen Verfahrens 100 wird für jedes der I Zeitschlitzen $B_i[n]$ (i=1,...,I) des n-ten Übertragungszyklus eine Datenrate $r_i[n]$ (i=1,...,I) geschätzt mit der das jeweilige Informationssignal (entsprechend dem Dienst i) in dem dem aktuellen Zeitschlitz $B_i[n]$ nachfolgenden Zeitschlitz $B_i[n+1]$ des (n+1)-ten Übertragungszyklus voraussichtlich übertragen wird. Daraus ergibt sich für den nachfolgenden Übertragungszyklus Z[n+1] eine geschätzte Zeitschlitzstruktur. Diese geschätzte Zeitschlitzstruktur umfasst geschätzte Zeitschlitzdauern und/oder Zeitschlitzstartzeitpunkte der nachfolgenden Zeitschlitze $B_i[n+1]$ (i=1,...,I).

In einem weiteren Schritt 104 wird für den aktuellen Übertragungszyklus Z[n] für jedes der I Informationssignale, basierend auf der geschätzten Zeitschlitzstruktur für den nachfolgenden Übertragungszyklus Z[n+1], eine relative Wartezeit Delta-$T_i[n]$ ermittelt, die auf einen geschätzten Startzeitpunkt $\hat{T}_i[n + 1]$ des nachfolgenden Zeitschlitzes $B_i[n+1]$ des i-ten Informationssignals hindeutet.

In einem drauf folgenden Schritt 106 wird jedem der nachfolgenden Zeitschlitze $B_i[n+1]$ (i=1,...,I) ein tatsächlicher Startzeitpunkt $T_i[n+1]$ und eine tatsächliche Datenrate $r_{eff,i}[n+1]$ (i=1,...,I) zugewiesen, um für den nachfolgenden Übertragungszyklus Z[n+1] eine tatsächliche Zeitschlitzstruktur zu erhalten. Dabei kann die tatsächliche Datenrate $r_{eff,i}[n+1]$ von der geschätzten und im Übertragungszyklus Z[n] übertragenen Datenrate $r_i[n]$ sowohl nach unten als auch noch oben abweichen. In dem Schritt 106 werden die tatsächlichen Startzeitpunkte $T_i[n+1]$ derart gewählt, dass jeder der tatsächlichen Startzeitpunkte $T_i[n+1]$ (i=1,...,I) der nachfolgenden Zeitschlitze $B_i[n+1]$ größer als oder gleich den jeweils vorher geschätzten Startzeitpunkten $\hat{T}_i[n+1]$ (i=1,...,I) ist. D. h., $T_i[n+1] \geq \hat{T}_i[n+1] = T_i[n] + $ Delta-$T_i[n]$. In anderen Worten ausgedrückt bedeutet dies, dass ein Zeitschlitz $B_i[n+1]$ niemals vor seinem im vorherigen Zeitschlitz $B_i[n]$ signalisierten Startzeitpunkt $\hat{T}_i[n + 1]$ beginnen kann.

Bei nur langsam veränderlichen Datenraten $r_{eff,i}[n]$ (i=1,...,I) bzw. bei guter Übereinstimmung von geschätzten und tatsächlichen Datenraten $r_i[n]$, $r_{eff,i}[n]$ (i=1,...,I) sind geschätzte und tatsächliche Zeitschlitzstruktur nahezu identisch, d.h. $T_i[n] \approx \hat{T}_i[n]$. Bei konstanten Datenraten bzw. bei exakter Übereinstimmung von geschätzten und tatsächlichen Datenraten sind geschätzte und tatsächliche Zeitschlitzstruktur identisch, d. h. $T_i[n] = \hat{T}_i[n]$, so dass ein Empfänger maximal leistungseffizient arbeiten kann. D.h., je besser das Schätzen 102, desto geringer sind die Abweichungen zwischen geschätzten und tatsächlichen Werten $r_i[n]$, $r_{eff,i}[n]$ bzw. $T_i[n]$, $\hat{T}_i[n]$, so dass ein Empfänger nicht bzw. nur unwesentlich vor einem Zeitschlitzstartzeitpunkt $T_i[n]$ (i=1,...,I) eingeschaltet wird. Natürlich kann $T_i[n] \approx \hat{T}_i[n]$ auch bei schnell veränderlichen Datenraten, d. h. Veränderung zwischen zwei aufeinanderfolgenden Zyklen Z[n], Z[n+1], gelten, wenn das Schätzen bzw. die Prädiktion 102 entsprechend gute Schätzwerte liefert.

Bevor das erfindungsgemäße Konzept in den nachfolgenden Absätzen noch detaillierter beschrieben wird, werden nun zunächst die in dieser Spezifikation verwendeten mathematischen Symbole erläutert:

I        Anzahl der Dienste in einem DVB-H Multiplex

$\{S_1, S_2, ..., S_i, ..., S_I\}$        Die Menge der Dienste (Servi- ces) des DVB-H Multiplex

$\{B[1], B[2], ..., B[n], ...\}$        Die Menge der zeitlich linea- ren Abfolge der Zeitschlitze aller Dienste im DVB-H Multiplex

$\{B_1[1], B_i[2], ..., B_i[n], ...\}$        Die Menge der zeitlich linearen Abfolge aller Zeitschlitze, die zum Dienst $S_i$ gehören

$r[n]$        Signalisierter Ratenbedarf des Zeitschlitze B[n]

$r_{eff}[n]$        Effektive Datenrate des Zeitschlitze B[n]

$r_w[n]$        Wunschrate des Zeitschlitze B[n]

$J_{max}$        Maximaler zeitlicher Jitter für den Zeitschlitz- anfang

$\Delta T[n]$        Verzögerung des Zeitschlitzbeginns von B[n] gegenüber dem signalisierten Start

$\Delta T_{max}[n]$        Maximal mögliche Verzögerung gegenüber dem signa- lisierten Start von Zeitschlitz B[n]

$\Delta t[n]$        Zeitliche Änderung der Zeitschlitzlänge des Zeitschlitzes B[n]

$f(i;n)$        Berechnet die lineare Zeitschlitznummer des Zeitschlitzes $B_i[n]$

$f_s^{-1}(n)$        Bestimmt die Nummer des Diensts, dem der Zeit- schlitz B[n] zugeordnet ist

$f_n^{-1}(n)$        Bestimmt die Zeitschlitznummer unter ausschließ- licher Betrachtung der Zeitschlitze des Diensts

c        Kosten pro Sekunde Übertragungskapazität

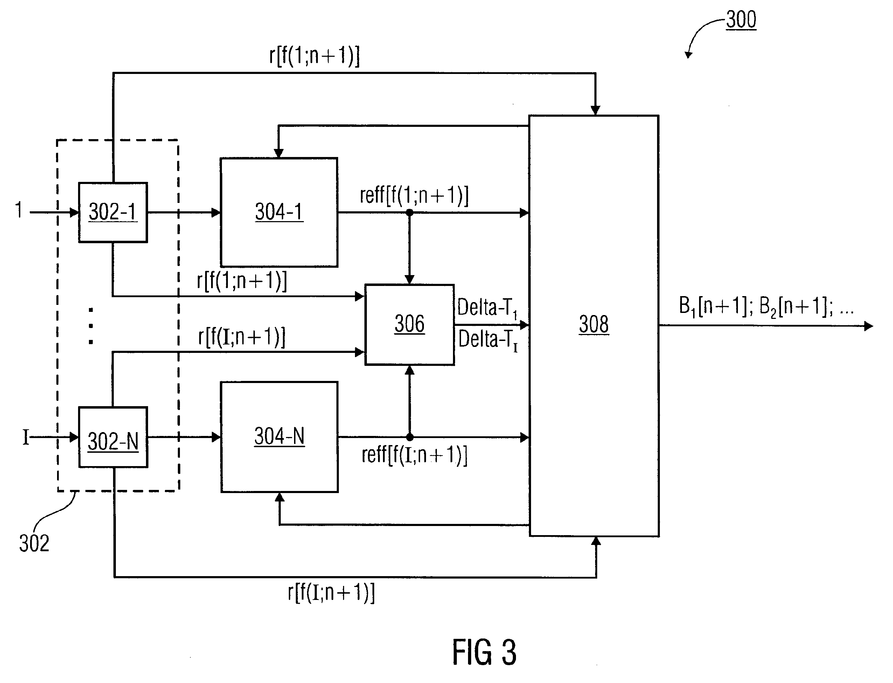

$u[n]$        Nutzenfunktion (Auszahlungsfunktion) für den zugehörigen Dienst zum Zeitpunkt des Zeitschlit- zes B[n] Anhand der Fig. 3 soll nun eine Vorrichtung 300 zur Übertragung einer Mehrzahl von Informationssignalen 301-i (i=1,...,I) in einer Mehrzahl von aktuellen und nachfolgenden Zeitschlitzen $B_i[n]$, $B_i[n+1]$ (i=1,...,I) in einem aktuellen und einem nachfolgenden Übertragungszyklus Z[n], Z[n+1] gemäß einem Zeitmultiplex beschrieben werden.

Die Vorrichtung 300 umfasst einen Schätzer bzw. Prädiktor 302, der ausgebildet ist, um für jedes der Informationssignale 301-i eine Datenrate r[f(i;n+1)] zu schätzen, mit der das Informationssignal 301-i in dem dem aktuellen Zeitschlitz $B_i[n]$ nachfolgenden Zeitschlitz $B_i[n+1]$ von einem zugeordneten Encoder 304-i (1=1,...,I) voraussichtlich encodiert wird, um eine geschätzte Zeitschlitzstruktur für den nachfolgenden Übertragungszyklus Z[n+1] zu erhalten.

Die Vorrichtung 300 weist einen Prozessor 306 auf, der ausgebildet ist, um für jedes der Informationssignale 301-i, basierend auf der geschätzten Zeitschlitzstruktur bzw. den geschätzten Datenraten r[f(i;n+1)] (i=1,...,I), eine relative Wartezeit Delta-$T_i$ zu ermitteln, die auf einen geschätzten Startzeitpunkt $\hat{T}_i[n + 1]$ des nachfolgenden Zeitschlitzes $B_i[n+1]$ hindeutet.

Vorgesehen ist ferner ein Zeitschlitz-Strukturierer 308, der ausgebildet ist, um jedem der nachfolgenden Zeitschlitze $B_i[n+1]$ einen tatsächlichen Startzeitpunkt $T_i[n+1]$ basierend auf einer tatsächlichen Datenrate $r_{eff}[f(i;n+1)]$ für das Informationssignal 301-i zuzuweisen, um eine tatsächliche Zeitschlitzstruktur zu erhalten, wobei die tatsächliche Datenrate $r_{eff}[f(i;n+1)]$ von einer im den Übertragungszyklus $Z[n]$ von dem Datenratenschätzer 302 geschätzten Datenrate $r[f(i;n+1)]$ (i=1,...,I) abweichen kann. Der Zeitschlitz-Strukturierer 308 ist dabei ausgebildet, um die tatsächlichen Startzeitpunkte $T_i[n+1]$ der nachfolgenden Zeitschlitze $B_i[n+1]$ größer als oder gleich dem jeweils im Vorhergehenden Übertragungszyklus $Z[n]$ geschätzten Startzeitpunkt $\hat{T}_i[n + 1]$ zu wählen, derart, dass ein tatsächlicher Startzeitpunkt niemals vor einem geschätzten Startzeitpunkt liegt. D. h., $T_i[n+1] \geq \hat{T}_i[n + 1]$. Im Idealfall, d. h. wenn $r[f(i;n+1)] = r_{eff}[f(i;n+1)]$, gilt $T_i[n+1] = \hat{T}_i[n + 1]$.

Die tatsächlichen Datenraten $r_{eff}[f(i;n+1)]$, mit denen die Informationssignale 301-i in dem Übertragungszyklus $Z[n+1]$ tatsächlich von Encodern 304-i (i=1,...,I) encodiert werden, ergeben sich aus gewünschten bzw. bevorzugten Datenraten $r_w[f(i;n+1)]$ und diversen weiteren Randbedingungen, die im Nachfolgenden noch erläutert werden.

Gemäß Ausführungsbeispielen ist der Prozessor 306 also ausgebildet, um jedem der aktuellen Zeitschlitze $B_i[n]$ einen tatsächlichen Startzeitpunkt $T_i[n]$ basierend auf einer tatsächlichen Datenrate $r_{eff}[f(i;n)]$ für ein dem aktuellen Zeitschlitz zugeordnetes Informationssignal 301-i zuzuweisen, um eine tatsächliche Zeitschlitzstruktur für den aktuellen Zeitschlitz zu erhalten, wobei die tatsächliche Datenrate $r_{eff}[f(i;n)]$ von einer in einem vorhergehenden Übertragungszyklus $Z[n-1]$ von dem Schätzer 302 geschätzten Datenrate $r[f(i;n)]$ abweichen kann, um die relative Wartezeit Delta-$T_i[n]$ für jedes der Informationssignale basierend auf der geschätzten Zeitschlitzstruktur für den nachfolgenden Übertragszyklus $Z[n+1]$ und der tatsächlichen Zeitschlitzstruktur für den aktuellen Übertragszyklus $Z[n]$ zu ermitteln.

Gemäß Ausführungsbeispielen ist der Prozessor 308 ferner ausgebildet, um jede der ermittelten relativen Wartezeiten Delta-$T_i[n]$ in einem aktuellen Zeitschlitz $B_i[n]$ eines zugeordneten Informationssignals 301-i einzubinden, um sie an einen entfernseitigen Empfänger für das sich aus dem gemultiplexten Zeitschlitzen $B_i[n]$ (i=1,...,I) ergebenden Multiplexsignals zu übertragen. Im Vergleich zu einem herkömmlichen System, bei dem Delta-T-Werte übertragen werden, sind es vorliegend also Schätzwerte für tatsächliche Delta-T-Werte, die im aktuellen Übertragungszyklus $Z[n]$ noch nicht bekannt sind, da die entsprechenden Signalabschnitte des nachfolgenden Zyklus $Z[n+1]$ noch nicht analysiert wurden. Das resultiert in einer geringeren Latenzzeit zwischen Eingang der Signalabschnitte und Versenden ihrer encodierten Versionen in den Zeitschlitzen.

Obwohl das erfindungsgemäße Konzept eine Verschiebung der vorher geschätzten Zeitschlitzstartzeitpunkte $T_i[n+1]$ nach hinten erlaubt, wie es noch erläutert wird, ist eine möglichst exakte Schätzung der Delta-T-Werte und damit der Startzeitpunkte $T_i[n+1]$ (i=1,...,I) vorteilhaft, da bei nur wenig abweichenden Schätzwerten $\hat{T}_i[n+1]$ ein Empfänger leistungseffizient arbeiten kann.

Der Datenratenschätzer 302 ist gemäß Ausführungsbeispielen ausgebildet, um eine Datenrate $r[f(i;n+1)]$ eines Informationssignals 301-i für den nachfolgenden Zeitschlitz $B_i[n+1]$ wenigstens basierend auf vorhergehenden und/oder aktuellen tatsächlichen Datenraten $\{r_{eff}[f(i;1)], r_{eff}[f(i;2)],..., r_{eff}[f(i;n)]\}$, vorhergehenden und/oder aktuellen bevorzugten Datenraten $\{r_w[f(i;1)], r_w[f(i;2)],..., r_w[f(i;n)]\}$ und vorhergehenden geschätzten bzw. signalisierten Datenraten $\{r[f(i;1)], r[f(i;2)],..., r[f(i;n)]\}$ des Informationssignals 301-i zu schätzen. Dabei kann es sich um einen kausalen Prädiktor handeln, der durch Beobachtung des vergangenen Ratenbedarfs sämtlicher Informationssignale oder des i-ten Informationssignal 301-i einen Schätzwert für den im nächsten Zeitschlitz $B_i[n+1]$ (1=1,...,I) benötigten Bedarf abgibt. Dabei kann der Schätzwert $r[f(i;n+1)]$ von den vergangenen signalisierten Datenraten, den vergangenen gewünschten Datenraten und den vergangenen tatsächlichen Datenraten des i-ten Informationssignals 301-i (i=1,...,I) abhängen.

Beispielsweise könnte ein prädiktiver Schätzer 302 gemäß einem Ausführungsbeispiel z. B. durch folgende Vorschrift realisiert werden:

$$r[f(i;n+1)] = \begin{cases} r_w[f(i;n)] + \alpha \cdot (r_{eff}[f(i;n)]), & falls\, r_{eff}[f(i;n)] > r[f(i;n)] \\ r_w[f(i;n)], & sonst \end{cases} \qquad (1)$$

Hierbei bezeichnet $r[f(i;n)]$ die signalisierte Datenrate des aktuellen Zeitschlitzes $B_i[n]$ (die bereits im Zyklus $Z[n-1]$ geschätzt wurde) und $r[f(i;n+1)]$ die geschätzte Datenrate des Folgezeitschlitzes des i-ten Diensts $S_i$. $r_w[f(i;n)]$ ist die bevorzugte Datenrate für Zeitschlitz $B_i[n]$, während $r_{eff}[f(i;n)]$ die schlussendlich zugeteilte bzw. tatsächliche Datenrate für den Zeitschlitz $B_i[n]$ bezeichnet. Der Kompensationsfaktor $\alpha \in [0;1]$ regelt den Grad der Fehlerkompensation.

Dem Fachmann wird unmittelbar einleuchten, dass der anhand von Gleichung (1) beschriebene prädiktive Schätzer 302 lediglich exemplarisch ist und durchaus auch anders realisiert werden kann. Algorithmen zur Implementierung von Prädiktoren sind aus der Fachliteratur bekannt, weshalb an dieser Stelle nicht weiter darauf eingegangen werden soll. Wie es bereits mehrfach betont wurde, ist die Qualität der Schätzwerte $r[f(i;n+1)]$ (1=1,...,I) maßgeblich für den am Empfänger erzielbaren Leistungsverbrauch.

Ausführungsbeispiele der vorliegenden Erfindung realisieren einen flexiblen Zeitmultiplex, bei dem es grundsätzlich möglich ist, die Datenmenge der einzelnen Zeitschlitze $B_\lambda[n]$ in gewissen Grenzen zu ändern, obwohl die betroffenen Zeitschlitzanfangszeiten $T_i[n]$ bzw. deren Schätzwerte $\hat{T}_i[n]$ bereits durch die Delta-T-Methode an die Empfänger signalisiert wurden (Delta-$T_i[n-1]$). Das erfindungsgemäße Konzept beruht dabei auf einer möglichen Verlängerung von Zeitschlitzen $B_i[n]$ in die benachbarten Folgezeitschlitze $B_{i+1}[n]$, $B_{i+2}[n]$, usw. hinein. Das erfindungsgemäße Konzept erlaubt eine Umverteilung der Datenraten der einzelnen Dienste bzw. Informationssignale 301-i in gewissen Grenzen. Die Zeitschlitzverlängerung soll im Folgenden anhand eines einfachen Beispiels erläutert werden: Es werden jeweils ein Zeitschlitz eines Dienstes $S_2$ und $S_3$ betrachtet, die in dem betrachteten Übertragungszyklus direkt hintereinander folgen sollen. Wird nun festgestellt, dass die vorher, d.h. in einem vorhergehenden Übertragungszyklus, geschätzte und signalisierte Datenrate des Dienstes $S_2$ für den aktuellen Zeitschlitz zu niedrig ist und in gleichem Maße die von $S_3$ zu hoch, so könnte man die Dauer des Zeitschlitzes von $S_2$ um einen bestimmten Betrag verlängern. In diesem Fall würde $S_2$ die gewünschten Daten übertragen können und die Datenrate von $S_3$ auf ein niedrigeres Niveau sinken. Allerdings ergibt sich für $S_3$ der Nachteil, dass der Zeitschlitzbeginn von $S_3$ später erfolgt, als dieser vorher signalisiert wurde. In diesem Fall würde der den Dienst $S_3$ erwartende Empfänger zu früh aktiviert und damit Empfangsleistung verschwendet.

In einem weiteren Beispiel wird nun angenommen, dass die Datenrate von $S_3$ doch nicht geändert werden soll. Die von $S_2$ benötigte zusätzliche Datenrate soll in diesem Beispiel stattdessen von $S_4$ bereitgestellt werden. Der Zeitschlitz von $S_4$ folgt dabei direkt auf den von $S_3$. In diesem Fall könnte

- der Zeitschlitz von $S_2$ verlängert,
- der Zeitschlitz von $S_3$ dann insgesamt um die verlängerte Zeitspanne verschoben und
- der Zeitschlitz von $S_4$ entsprechend verkürzt werden.

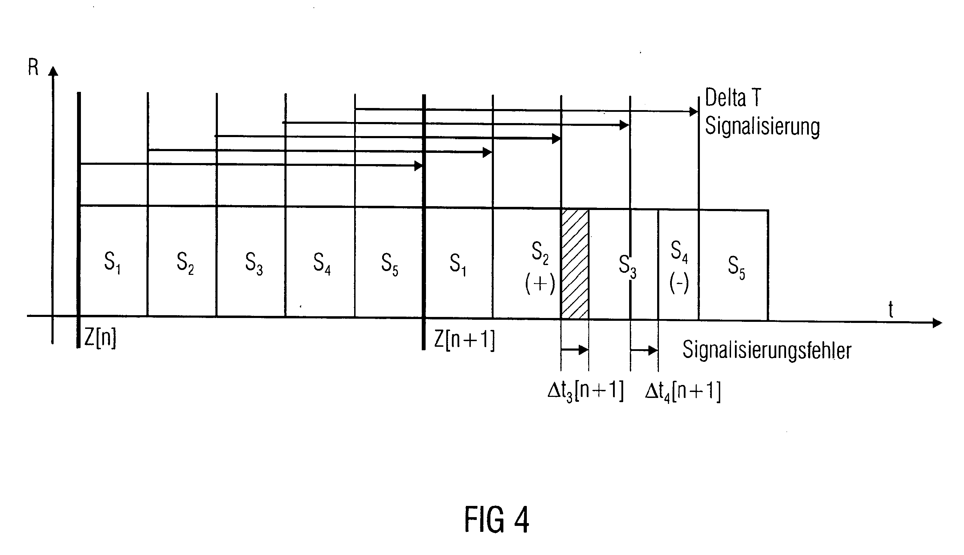

Dieser exemplarische Sachverhalt ist in Fig. 4 dargestellt. Die Datenrate kann auch in diesem Beispiel erfolgreich umverteilt werden. Sowohl für $S_3$ als auch für $S_4$ ergibt sich jeweils ein verspäteter Zeitschlitzbeginn um $\Delta t_3$ bzw. $\Delta t_4$. Es wird. Es wird deutlich, dass bei einem Austausch von Datenrate zwischen zwei unterschiedlichen Diensten die Zeitschlitze aller dazwischen liegender Dienste (hier: $S_3$) verspätet ausgespielt werden.

In den nachfolgenden Abschnitten soll erläutert werden, welchen Bedingungen der Austausch von Datenrate zwischen verschiedenen Zeitschlitzen unterliegt.

Dazu wird die zeitliche Abfolge hintereinander liegender Zeitschlitze B[1],...,B[n],... betrachtet, deren geschätzte Startzeitpunkte bereits an die Empfänger mit Hilfe der Delta-T-Methode signalisiert wurden. Für jeden Zeitschlitz B[n] wird dabei eine Änderung der Zeitschlitzdauer um den Wert $\Delta t[n]$ vorgenommen. Somit ergibt sich eine Abweichung von dem geschätzten Startzeitpunkt des Zeitschlitzes B[n] zu:

$$\Delta T[n] = \sum_{j=1}^{n-1} \Delta t[j] \qquad\qquad (2)$$

Als Randbedingung für weitere, nachfolgende Betrachtungen folgt aus der Tatsache, dass ein Zeitschlitz B[n] niemals vor seinem geschätzten bzw. signalisierten Startzeitpunkt beginnen darf:

$$\Delta T[n] \geq 0 \forall n \in N \qquad\qquad (3)$$

Wird die vorher beschriebene Umverteilung der Datenrate als Spiel im Sinne der Spieltheorie betrachtet, so wird deutlich, dass für einen optimalen Nutzen alle Teilnehmer des Spiels kooperieren müssen, da andernfalls die optimale Strategie für jeden Teilnehmer darin bestünde, seinen Zeitschlitz maximal zu verlängern, um möglichst hohe Datenraten unterbringen zu können. Zur Vermeidung dieses Kooperationszwangs als Voraussetzung für einen funktionalen flexiblen Multiplex werden daher folgende einschränkende Regeln zur Umverteilung der Datenrate eingeführt:

1. Wird ein Zeitschlitz B[f(i;n)] um $\Delta t[f(i;n)]$ verlängert, sollte es für den Dienst $S_i$ möglich sein, diese Verlängerung in dem nachfolgenden Zeitschlitz B[f(i;n+1)] zu kompensieren, d. h. die geplante Zeitschlitzdauer des nachfolgenden Zeitschlitzes B[f(i;n+1)] sollte länger sein als Δt[f(i;n)]. Dazu ist der Zeitschlitz-Strukturierer 308 gemäß Ausführungsbeispielen ausgebildet, um jedem der aktuellen Zeitschlitze B[f(i;n)] einen tatsächlichen Startzeitpunkt und eine tatsächliche Datenrate $r_{eff}$[f(i;n)] zuzuweisen, die von einer vorher geschätzten Datenrate r[f(i;n-1)] abweichen kann, und um eine Dauer eines aktuellen Zeitschlitzes nur dann um eine Differenzzeitdauer Δt[f(i;n)] zu ändern, wenn eine geschätzte Dauer des nachfolgenden Zeitschlitzes B[f(i;n+1)] größer als die Differenzzeitdauer Δt[f(i;n)] ist.

2. Die tatsächliche Änderung Δt[f(i;n)] der aktuellen Zeitschlitzlänge, d. h. die Differenzzeitdauer, wird unter Beachtung von Ungleichung (3) bestimmt durch:

$$\Delta t[f(i;n)] = \max\left(\Delta t_w[f(i;n)] - \max(\Delta t_w[f(i;n-1)];0)\right];-\Delta T[f(i;n)]\right)$$

$$(4)$$

Dabei bedeutet $\Delta t_w$[f(i;n)] eine gewünschte bzw. bevorzugte Differenzzeitdauer des aktuellen Zeitschlitzes B[f(i;n)]. Die bevorzugte Differenzzeitdauer $\Delta t_w$[f(i;n)], die direkt von der bevorzugten Datenrate $r_w$[f(i;n)] für den aktuellen Zeitschlitz B[f(i;n)] abhängt, ergibt sich gemäß Ausführungsbeispielen zusätzlich noch aus Datenratenkosten, wie beispielsweise einem Preis pro Datenrateneinheit. Darauf wird weiter unten noch eingegangen. Die bevorzugte Differenzzeitdauer $\Delta t_w$[f(i;0)] für den jeweils ersten Zeitschlitz B[f(i;0)] des Dienstes $S_i$ wird zu Null angenommen, d.h. $\Delta t_w$[f(i;0)] = 0. Um Gleichung (4) zu realisieren, ist der Zeitschlitz-Strukturierer 308 gemäß einem Ausführungsbeispiel also ausgebildet, um die Differenzzeitdauer Δt[f(i;n)] abhängig von einer sich für den aktuellen Zeitschlitz aus einer bevorzugten Datenrate ergebenden Differenzzeitdauer $\Delta t_w$[f(i;n)], einer sich aus einer für den vorhergehenden Zeitschlitz bevorzugten Datenrate ergebenden Differenzzeitdauer $\Delta t_w$[f(i;n-1)] und einer Verzögerung ΔT[f(i;n)] des tatsächlichen Startzeitpunkts T[f(i;n)] gegenüber einem im Vorhergehenden Übertragungsrahmen geschätzten Startzeitpunkt $\hat{T}_i[n]$ zu bestimmen.

Gleichung (4) beschreibt quasi den Datenratenaustausch zwischen zwei aufeinander folgenden Zeitschlitzen B[f(i;n-1)] und B[f(i;n)] (bzw. B[f(i;n)] und B[f(i;n+1)]). Wurde der vorangegangene Zeitschlitz B[f(i;n-1)] bereits um $\Delta t_w$[f(i;n-1)] verlängert, so wird gemäß Gleichung (4) diese Verlängerungszeitdauer von der aktuell gewünschten Differenzzeitdauer $\Delta t_w$[f(i;n)] abgezogen. Man kann dies so interpretieren, dass Datenratenschulden des vorangegangenen Zeitschlitzes B[f(i;n-1)] in dem darauf folgenden Zeitschlitz B[f(i;n)] beglichen werden. Wurde der vorangegangene Zeitschlitz also verlängert ($\Delta t_w$[f(i;n-1)] > 0), so wird gemäß Gleichung (4) diese Verlängerungszeit von der gewünschten Verlängerung $\Delta t_w$[f(i;n)] des aktuellen Zeitschlitzes B[f(i;n)] abgezogen, um die tatsächliche Änderung Δt[f(i;n)] der Zeitschlitzlänge zu erhalten. Die tatsächliche Änderung Δt[f(i;n)] der Zeitschlitzlänge kann natürlich auch negativ ausfallen, was einer Verkürzung des Zeitschlitzes B[f(i;n)] entspricht. Gleichung (4) bringt außerdem zum Ausdruck, dass der aktuelle Zeitschlitz B[f(i;n)] um nicht mehr als die Gesamtverzögerung ΔT[f(i;n)] verkürzt werden darf, um Ungleichung (3) nicht zu verletzen, d.h. Δt[f(i;n)] ≥ -ΔT[f(i;n)]. Der Zeitschlitz-Strukturierer 308 ist demnach gemäß einem Ausführungsbeispiel ausgebildet, um die Differenzzeitdauer Δt[f(i;n)] eines Zeitschlitzes B[f(i;n)] eines Informationssignals so zu wählen, dass sie größer ist als eine negative akkumulierte Gesamtverzögerungszeit - ΔT[f(i;n+1)] von zeitlich vorhergehenden Zeitschlitzen eines Übertragungszyklus.

3. Es sei für jeden Zeitschlitz B[f(i;n)] eine für alle n bekannte maximal mögliche Verzögerung $\Delta T_{max}$[f(i;n)] des Zeitschlitzbeginns definiert. Diese maximal mögliche Verzögerung $\Delta T_{max}$[f(1;n)] kann beispielsweise aus der Auslastung der Jitterpuffer der jeweiligen Diensts $S_i$ ermittelt werden. Damit sollte sich kein Zeitschlitz B[f(i;n)] zeitlich weiter nach hinten verschieben, als es $\Delta T_{max}$[f(i;n)] erlaubt. Unter Berücksichtigung von bekannten und geschätzten Verschiebungen von benachbarten Zeitschlitzen ergibt sich für die tatsächliche Änderung Δt[f(i;n)] als weitere Randbedingung:

$$\Delta t[f(i;n)] \leq \min_{m=f(i;n)+1}^{f(i;n+1)} \left(\Delta T_{max}[m] - \Delta \tilde{T}[m;n]\right) \forall i \in [1;N], n \in \mathbb{N} \qquad (5)$$

Damit die Ungleichung (5) erfüllt wird, muss die gewünschte Änderung $\Delta t_w$[f(i;n)] der Zeitschlitzdauer entsprechend gewählt werden. D. h., auf Basis von Ungleichung (5) können die verschiedenen Dienste $S_i$ (1=1,..., I) untereinander mit Datenraten handeln, um die durch diese Ungleichung ausgedrückte Randbedingung für jeden Zeitschlitz und jeden Übertragungszyklus zu erfüllen. Die Funktion $\Delta \tilde{T}$[m; n] stellt dabei eine Hilfsfunktion dar, die zukünftige, d.h.

noch nicht stattgefundene Verschiebungen von benachbarten Zeitschlitzen schätzt. Sei n die Nummer des aktuellen Zeitschlitzes und m die Nummer eines benachbarten Zeitschlitzes, dessen Verschiebung zu schätzen ist. In diesem Fall sei die Funktion definiert durch:

$$\Delta \tilde{T}[m; n] = \sum_{l=1}^{m-1} \Delta \tilde{t}[l; n]$$

$$\Delta \tilde{t}[l; n] = \begin{cases} \Delta t[l] & \text{falls } l < n \\ \max(-\max(\Delta t_w[\text{prev}(l)];0) ; \Delta \tilde{T}[l; n]) & \text{falls } l \geq n \\ & \text{und } \text{prev}(l) < n \\ 0 & \text{sonst} \end{cases}$$

$$\text{prev}(n) = f(f_s^{-1}(n); f_n^{-1}(n) - 1)$$

$$(6)$$

Die Ungleichung (5) i. V. m. Gl. (6) besagt also, dass jeder Zeitschlitz nur maximal um soviel verlängert werden kann, dass es für keinen der benachbarten Zeitschlitze in dem Übertragungszyklus zur Überschreitung seiner maximal möglichen Verzögerung $\Delta T_{max}$ kommt. Dabei sind bei der Abschätzung von $\Delta \tilde{T}[m; n]$ natürlich die bereits bekannten Zeitschlitzänderungen ($l \leq n$) vorher betrachteter bzw. geänderter Zeitschlitze und noch zu ändernde Zeitschlitze ($l > n$ und prev(1) < n) des Übertragungszyklus zu berücksichtigen. Für die noch zu betrachtenden Zeitschlitze B[m] bestimmt sich der entsprechende Schätzwert $\Delta \tilde{T}[m; n]$ für die Änderung aus der Änderung des dem zugehörigen Dienst $f_s^{-1}(m)$ entsprechenden Zeitschlitzes $f_i^{-1}(m)$ des vorangegangenen Übertragungs-zyklus. Diese Schätzung basiert auf der Annahme, dass in dem vorangegangenen Übertragungszyklus abgegebene bzw. dazu genommene Datenrate in dem aktuellen Übertragungszyklus wieder eingefordert bzw. zurückgegeben wird. Bei der Schätzung nach Gleichung (5) bzw. (6) wird also ebenfalls das Prinzip der Datenratenleihe eingesetzt.

4. Jeder Zeitschlitz B[f(i;n)], für den gilt $\max(\Delta t_w[f(i;n-1)];0) < \Delta T[f(i;n)]$, kann alternativ auch verkürzt werden, d. h. $\Delta t_w[f(i;n)] < 0$. Hierbei muss wieder Ungleichung (3) als Randbedingung betrachtet werden, die minimale gewünschte zeitliche Änderung $\Delta t_w[f(i;n)]$ ergibt sich durch Einsetzen in Gleichung (4) zu:

$$\Delta t_{w,min}[f(i;n)] = \max(\Delta t_w[f(i;n-1)];0) - \Delta T[f(i;n)] \qquad (7)$$

Wie oben bereits beschrieben wurde, drückt Gleichung (7) aus, dass die Änderung $\Delta t[f(i;n)]$ der Zeitschlitzlänge nicht so gewählt werden darf, dass ein Zeitschlitz B[f(i;n)] vor seinem vorher signalisierten bzw. geschätzten Startzeitpunkt beginnen kann. $\Delta t_{w,min}$ gemäß Gleichung (7) bringt genau dies zum Ausdruck.
Obige Regeln 1 - 4 bedeuten,

a) dass jeder Zeitschlitz B[f(i;n)] so viel Datenrate von seinem eigenen zukünftigen Zeitschlitz B[f(i;n+1)] vorverlegen kann, wie die anderen Dienste durch ihre Jitterpuffer kompensieren können,

b) dass während jedem Zeitschlitz bereits aufakkumulierte Verzögerung $\Delta T[n]$ durch Verkürzung der Zeitschlitzlängen von anderen Diensten ganz oder teilweise kompensiert werden kann.

Wie bereits angedeutet, resultieren die gewünschten Änderungen $\Delta t_w[f(i;n)]$ der Zeitschlitzlängen gemäß Ausführungsbeispielen aus einem Zusammenspiel aus von den Encodern 304-i gewünschten bzw. bevorzugten Datenraten $r_w[f(i;n)]$ und Datenratenkosten, beispielsweise in Form von einem Preis pro Datenrateneinheit. D.h., gemäß Ausführungsbeispielen ist der Zeitschlitz-Strukturierer 308 ausgebildet ist, um jede der tatsächlichen Datenraten $r_{eff}[f(i;n)]$ eines Übertragungszyklus jeweils abhängig von dem aktuell zu übertragenden Informationssignal 301-i und Datenratenkosten einzustellen.

Die Änderung $\Delta t[f(i;n)]$ der Zeitschlitzlängen soll mit einer Auszahlungsfunktion belegt werden. Für Dienste $S_i$, die einen Zeitschlitz $B_i[n]$ bzw. $B[f(i;n)]$ verlängern, wird dabei eine negative Auszahlungsfunktion definiert. Diese negative Auszahlung wird in gleichen Teilen an alle Dienste $S_j$ ($j \neq i$) (positiv) ausgezahlt, deren Zeitschlitze durch diese Verlängerung $\Delta t[f(i;n)]$ verschoben wurden. Wird ein Zeitschlitz dagegen verkürzt ($\Delta t[f(i;n)] < 0$), so erhält der Dienst, der nun weniger Bits überträgt, ein Auszahlungsäquivalent für diese Reduktion der Verschiebung.

Im Nachfolgenden soll dies für eine proportionale Kostenfunktion erläutert werden. Es sei ein konstanter Preis c pro Sekunde Übertragungszeit festgelegt. Wird ein Zeitschlitz $B[n]$, der zum Dienst $S_i$ gehört, um $\Delta t[n]$ verlängert, so erhalten die anderen Dienste für alle Zeitschlitze, die zwischen $B=[f(i;n)]$ und $B[f(i;n+1)]$ übertragen werden, d. h. $B[x]$

$$\forall x \in [n + 1; \; B[x]\forall x \; \in \; \left[ n \; + \; 1; \; f\!\left(f_s^{-1}(n); \; f_n^{-1}(n) \; + \; 1 \right) \right],$$ folgende Auszahlung:

$$u[x] \; = \; c \; \cdot \; \Delta t[n] \qquad\qquad (8)$$

Werden mehrere Zeitschlitzverlängerungen überlagert, ergibt sich daraus folgende Auszahlungsfunktion:

$$u[n] \; = \; c \; \cdot \; \sum_{x=1}^{n-1} \Delta t[x] \; = \; c \; \cdot \; \Delta T[n] \qquad\qquad (9)$$

Aus Gleichung (8) kann die (negative) Auszahlungsfunktion für den Dienst, dessen Zeitschlitz verlängert wird, bestimmt werden:

$$u[n] \; = \; -c \; \cdot \; \Delta t[n] \; \cdot \; \left( f(i; \; n \; + \; 1) \; - \; f(i; \; n) \right) \qquad\qquad (10)$$

Wird ein Zeitschlitz verkürzt, d. h. ($\Delta t[n] < 0$), und kompensiert damit ganz oder teilweise eine bestehende Gesamtverschiebung, so erhält der Dienst, zu dessen Lasten die Verkürzung erfolgt, eine zusätzliche Auszahlung für die Kompensation:

$$u[n] \; = \; \frac{-\Delta t[n]}{\Delta T[n]} \; \cdot \; c \; \cdot \; \sum_{m=n+1}^{\infty} \Delta \tilde{T}[m; \; n] \qquad\qquad (11)$$

Somit ergibt sich die Gesamtauszahlung pro Zeitschlitz zu:

$$u[n] \; = \; c \; \cdot \; \Delta T[n] \; \cdot \; \begin{cases} 1 \; - \; \dfrac{\Delta t[n]}{\Delta T[n]} \; \cdot \; \left( f(i; \; n \; + \; 1) \; - \; f(i; \; n) \right) & \text{falls } \Delta t[n] \; \geq \; 0 \\[2mm] 1 \; - \; \dfrac{\Delta t[n]}{\Delta T[n]^2} \; \cdot \; \sum_{m=n+1}^{\infty} \Delta \tilde{T}[m; \; n] & \text{sonst} \end{cases} \qquad (12)$$

Gemäß Ausführungsbeispielen der vorliegenden Erfindung ist der Zeitschlitz-Strukturierer 308 also ausgebildet, um jede der tatsächlichen Datenraten $r_{eff}[f(i;n)]$ jeweils abhängig von dem im zugeordneten Zeitschlitz tatsächlich zu übertragenden Informationssignal 301-i und Datenratenkosten c einzustellen. Dabei kann jedem der Informationssignale 301-i ein von den Datenratenkosten c abhängiger Wert $u[f(i;n)]$ gutgeschrieben werden, wenn der Zeitschlitz $B[f(i;n)]$ des Informationssignals 301-i verkürzt wird ($\Delta t[f(i;n)] < 0$), und ein von den Datenratenkosten abhängiger Wert $u[f(i;n)]$ abgezogen werden, wenn der Zeitschlitz $B[f(i;n)]$ des Informationssignals 301-i verlängert wird, d.h. $\Delta t[f(i;n)] > 0$.

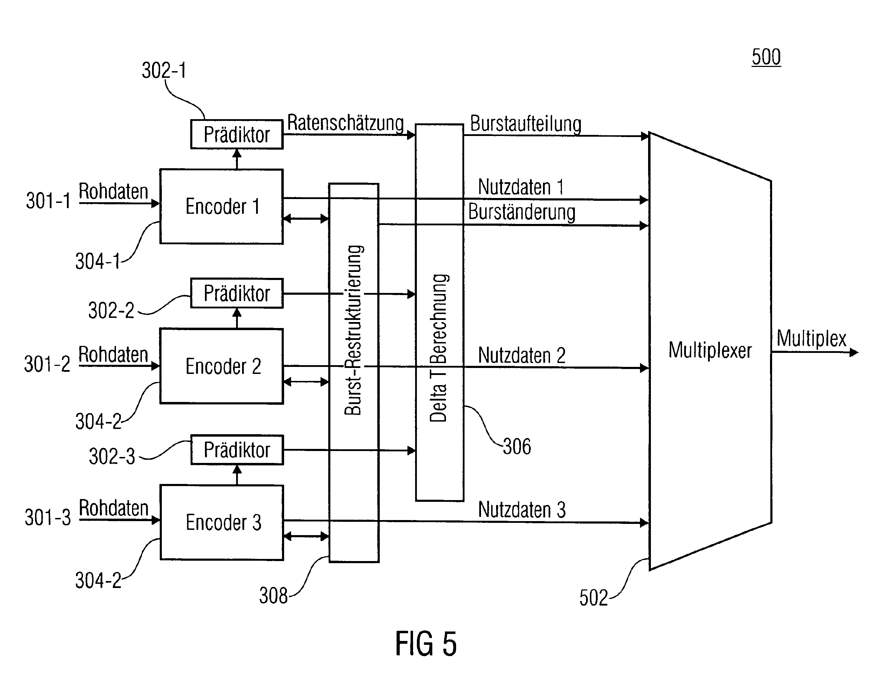

Ein Gesamtsystem zur Übertragung der Mehrzahl der Informationssignale 301-i in einem flexiblen Multiplex ist zusammenfassend in Fig. 5 gezeigt.

In Fig. 5 ist das System exemplarisch für drei Dienste dargestellt. Die Encoder 304-i übermitteln hierbei an die Prädiktorblöcke 302-i die notwendigen Zustandsdaten betreffend die eingehenden Informationssignale 301-i, so dass eine Datenratenschätzung, wie sie im Vorhergehenden beschrieben wurde, durchgeführt werden kann. Basierend auf dieser Datenratenschätzung werden anschließend die zukünftigen Delta-T-Werte berechnet. Diese werden von einem DVB-H Multiplexer 502 in einen Bitstrom integriert und anschließend beispielsweise an DVB-H Endgeräte übermittelt. Dazu können die Encoder 304-i über den Zeitschlitz-Strukturierer 308 kurzfristige Änderungen der DVB-H Zeitschlitzaufteilung durchführen. Der Block 308 kann dabei entweder, wie in Fig. 5 dargestellt, als zentrale Einheit oder aber auch dezentral ausgeführt sein. D. h., der Zeitschlitz-Strukturierer 308 könnte auf die einzelnen Diensteanbieter aufgeteilt sein, so dass jeder Diensteanbieter seinen zugeordneten Zeitschlitz (re-)strukturiert - allerdings unter Berücksichtigung der bekannten vergangenen bzw. geschätzten noch vorzunehmenden Restrukturierungen der jeweils anderen Dienste (siehe Gl. (6)). Somit wäre in diesem Fall zumindest eine Vernetzung der dezentralen Restrukturierungseinheiten notwendig. In jedem Fall werden bei der Umverteilung Randbedingungen und Vorschriften beachtet, wie sie im Vorhergehenden exemplarisch beschrieben wurden.

Jede Umverteilung wird von einem einzelnen Encoder 304-i initiiert. Grundsätzlich kann ein initiierender Encoder dabei zwischen einer Verlängerung und einer Verkürzung eines Zeitschlitzes wählen. Mit Hilfe der Auszahlungsfunktion $u[.]$, die im Vorhergehenden definiert wurde, kann der Encoder 304-i die Kosten bzw. den Nutzen einer Zeitschlitzverlängerung bzw. -verkürzung ermitteln. Dadurch steht ihm ein Bewertungsinstrument zur Verfügung, um den eigenen Datenratenbedarf zu steuern.

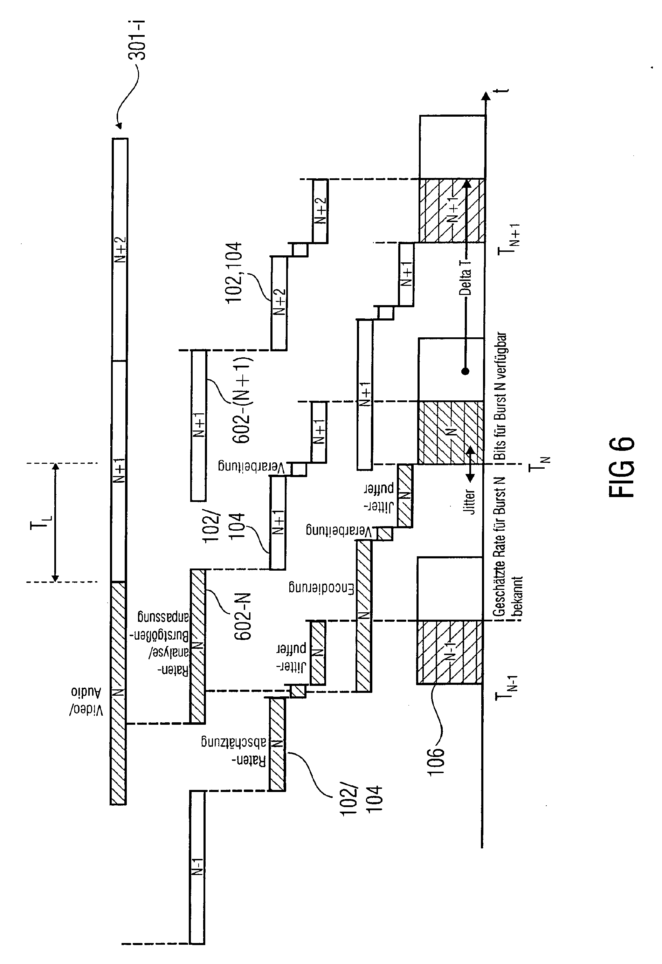

Das vorgeschlagene erfindungsgemäße Konzept verkürzt eine Latenzzeit bzw. Ende-zu-Ende-Verzögerung $T_L$, die eingangs bereits anhand von Fig. 9 beschrieben wurde, derart, dass der Zeitpunkt, zu dem die tatsächliche Datenratenaufteilung bekannt sein muss, näher an den Ausspielzeitpunkt der eigentlichen Nutzdaten gerückt wird. Dieser Zusammenhang ist in Fig. 6 gezeigt.

Fig. 6 zeigt ein Informationssignal 301-i, welches in verschiedene Informationssignalabschnitte N-1, N, N+1, N+2, ..., aufgeteilt ist. Für den Informationssignalabschnitt N lässt sich erkennen, dass der Zeitpunkt, zu dem die Datenratenanalyse 602-N des N-ten Informationssignalabschnitts beendet ist, näher an den Ausspielzeitpunkt $T_N$ des N-ten Zeitschlitzes gerückt ist als im Vergleich zur eingangs beschriebenen Fig. 9. Dies ist darauf zurückzuführen, dass eine Datenratenanalyse 602-(N+1) für den nachfolgenden Informationssignalabschnitt N+1 zum Ausspielzeitpunkt $T_N$ nicht benötigt wird, sondern stattdessen eine Schätzung 102,104 der im Zeitschlitz N zu übertragenden Delta-T-Werte für Abschnitt N+1 durchgeführt wird. Diese Schätzung ist dabei weniger aufwendig, und benötigt nicht den nachfolgenden Informationssignalabschnitt N+1, sondern, kann wie es bereits beschrieben wurde, anhand vergangener und aktueller Informationssignalabschnitte durchgeführt werden (Gln. (1) und (2)).

Abschließend soll noch darauf hingewiesen werden, dass der durch das erfindungsgemäße Konzept generierte Bitstrom von einem standardkonformen (z. B. DVB-H) Endgerät vollständig transparent verarbeitet werden kann.

Das vorgestellte erfindungsgemäße Konzept kann beispielsweise in einem, wie folgt beschriebenen, Datenratenhandelssystem eingesetzt werden. Dort werden Datenraten in einem Netzwerk, insbesondere in einem DVB-H-Netzwerk, über ein Handelssystem, ähnlich einem Marktplatz, unter Informationssignal- bzw. Dienstanbietern des Netzwerks verteilt. Es wird eine Handelsplattform mit Datenratenaquisevorrichtungen bzw. Software-Agenten und einer Datenratenvergabevorrichtung bzw. einem Datenraten-Makler verwendet, um Datenraten der einzelnen Informationssignalanbieter zu steuern. Teilnehmer der Handelsplattform sind die Software-Agenten bzw. die Datenratenaquisevorrichtungen. diese übernehmen stellvertretend für die Informationssignalanbieter den Handel mit Datenraten des Multiplexes und akquirieren auf diese Weise Übertragungskapazitäten für die ihnen zugeordneten Informationssignaldienste.

Es soll darauf hingewiesen werden, dass die vorliegende Erfindung nicht auf die jeweiligen Bauteile der Vorrichtungen oder die erläuterte Vorgehensweise beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn in der Beschreibung und in den Ansprüchen die Anzahl oder unbestimmte Artikel verwendet werden, beziehen sich diese auch auf die Mehrzahl dieser Elemente, so lange nicht der Gesamtzusammenhang eindeutig etwas anderes deutlich macht. Dasselbe gilt in umgekehrter Richtung.

Obwohl sich DVB-H-Netzwerke für das erfindungsgemäße Konzept besonders anbieten, da DVB-H beliebige Datenströme in Form von IP-Datagrammen überträgt, ist das erfindungsgemäße Konzept nicht auf DVB-H-Netzwerke beschränkt.

Insbesondere wird darauf hingewiesen, dass abhängig von den Gegebenheiten das erfindungsgemäße Konzept auch in Software implementiert sein kann. Die Implementierung kann auf einem digitalen Speichermedium, insbesondere einer DVD, CD oder Diskette mit elektronisch auslesbaren Steuersignalen erfolgen, die so mit einem programmierbaren Computersystem und/oder Mikrokontroller zusammenwirken können, dass das entsprechende Verfahren zur Übertragung der Mehrzahl von Informationssignalen in einem flexiblen Multiplex ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Rechner und/oder Mikrokontroller abläuft. In anderen Worten ausgedrückt, kann die Erfindung somit als ein Computerprogramm mit einem Programmcode zur Durchführung des Verfahrens realisiert werden, wenn das Computerprogramm auf einem Computer und/oder Mikrokontroller abläuft.

**Patentansprüche**

1. Vorrichtung (300) zur Übertragung einer Mehrzahl von Informationssignalen (301-i) gemäß einem zyklischen Zeitmultiplex, mit folgenden Merkmalen:

    einem Schätzer (302), der ausgebildet ist, um für jedes der Informationssignale (301-i) eine Datenrate ($r_i[n]$; $r[f(i;n+1)]$) zu schätzen, mit der das Informationssignal in einem dem aktuellen Zeitschlitz ($B_i[n]$; $B[f(i;n)]$) nachfolgenden Zeitschlitz ($B_i[n+1]$; $B[f(i;n+1)]$) voraussichtlich encodiert wird;
    einem Prozessor (306), der ausgebildet ist, um für jedes der Informationssignale (301-i), basierend auf der geschätzten Datenrate ($r_i[n]$; $r[f(i;n+1)]$), eine relative Wartezeit (Delta-T) zu ermitteln, die auf einen geschätzten Startzeitpunkt ($\tilde{T}_i[n+1]$) des nachfolgenden Zeitschlitzes ($B_i[n+1]$) des Informationssignals (301-i) hindeutet; und
    einem Zeitschlitz-Strukturierer (308), der ausgebildet ist, um jedem der nachfolgenden Zeitschlitze ($B_i[n+1]$; $B[f(i;n+1)]$) einen tatsächlichen Startzeitpunkt ($T_i[n+1]$; $T[f(i;n+1)$) basierend auf einer tatsächlichen Datenrate ($r_{eff,i}[n]$; $r_{eff}[f(i;n+1)]$) für das Informationssignal (301-i) zuzuweisen, wobei die tatsächliche Datenrate ($r_{eff,i}[n]$; $r_{eff}[f(i;n+1)]$) von einer von dem Schätzer (302) geschätzten Datenrate ($r_i[n]$; $r[f(i;n+1)]$) abweichen kann,

    wobei jeder der tatsächlichen Startzeitpunkte ($\tilde{T}_i[n+1]$; $T[f(i;n+1)$) der nachfolgenden Zeitschlitze größer als oder gleich dem jeweils geschätzten Startzeitpunkt ($\tilde{T}_i[n+1]$) ist.

2. Vorrichtung nach Anspruch 1, wobei der Prozessor (306) ausgebildet ist, um die relative Wartezeit (Delta-T) derart zu ermitteln, dass ein geschätzter Startzeitpunkt ($\tilde{T}_i[n+1]$) und ein tatsächlicher Startzeitpunkt ($T_i[n+1]$; $T[f(i;n+1)$) des nachfolgenden Zeitschlitzes ($B_i[n+1]$) genau aufeinander fallen, falls sich geschätzte Datenrate ($r_i[n]$; $r[f(i;n+1)]$) und tatsächliche Datenrate ($r_{eff,i}[n]$; $r_{eff}[f(i;n+1)]$) sämtlicher Informationssignale nicht unterscheiden.

3. Vorrichtung nach Anspruch 1 oder 2, wobei der Prozessor (306) ausgebildet ist, um jede der ermittelten relativen Wartezeiten (Delta-$T_i[n]$) in einem aktuellen Zeitschlitz ($B_i[n]$) eines zugeordneten Informationssignals (301-i) einzubinden, um sie an einen Empfänger zu übertragen.

4. Vorrichtung nach einem der vorhergehenden Ansprüche, wobei der Schätzer (302) ausgebildet ist, um eine Datenrate ($r_{eff}[f(i;n+1)]$) eines Informationssignals (301-i) für den nachfolgenden Zeitschlitz ($B_i[n+1]$) wenigstens basierend auf vorhergehenden und/oder aktuellen tatsächlichen Datenraten ($r_{eff}[f(i;n-1)]$; $r_{eff}[f(i;n)]$) des Informationssignals zu schätzen.

5. Vorrichtung nach einem der vorhergehenden Ansprüche, wobei der Schätzer (302) ausgebildet ist, um eine Datenrate ($r_{eff}[f(i;n+1)]$) eines Informationssignals (301-i) für den nachfolgenden Zeitschlitz ($B_i[n+1]$) basierend auf der geschätzten Datenrate, der tatsächlichen Datenrate und einer für den nachfolgenden Zeitschlitz bevorzugten Datenrate des Informationssignals zu schätzen.

6. Vorrichtung nach einem der vorhergehenden Ansprüche, wobei der Zeitschlitz-Strukturierer (308) ausgebildet ist, um jedem der aktuellen Zeitschlitze ($B[f(i;n)]$) einen tatsächlichen Startzeitpunkt und eine tatsächliche Datenrate ($r_{eff}[f(i;n)]$) zuzuweisen, die von einer vorher geschätzten Datenrate ($r[f(i;n-1)]$) abweichen kann, und um eine Dauer eines aktuellen Zeitschlitzes nur dann um eine Differenzzeitdauer ($\Delta t[f(i;n)]$) zu ändern, wenn eine geschätzte Dauer des nachfolgenden Zeitschlitzes ($B[f(i;n+1)]$) größer als die Differenzzeitdauer ($\Delta t[f(i;n)]$) ist.

7. Vorrichtung nach Anspruch 6, wobei der Zeitschlitz-Strukturierer (308) ausgebildet ist, um die Differenzzeitdauer ($\Delta t[f(i;n)]$) abhängig von einer sich für den aktuellen Zeitschlitz aus einer bevorzugten Datenrate ergebenden Diffe-

renzzeitdauer ($\Delta t_w[f(i;n)]$), einer sich aus einer für den vorhergehenden Zeitschlitz bevorzugten Datenrate ergebenden Differenzzeitdauer ($\Delta t_w[f(i;n-1)]$) und einer Verzögerung ($\Delta T[f(i;n)]$) des tatsächlichen Startzeitpunkts ($T[f(i;n)]$) gegenüber einem im vorhergehenden Übertragungszyklus geschätzten Startzeitpunkt ($\tilde{T}_i[n]$) zu bestimmen

8. Vorrichtung nach einem der vorhergehenden Ansprüche, wobei der Zeitschlitz-Strukturierer (308) ausgebildet ist, um jedem der nachfolgenden Zeitschlitze ($B[f(i:n+1)]$) eine Differenzzeitdauer ($\Delta t[f(i;n+1)]$) entsprechend der tatsächlichen Datenrate ($r_{eff}[f(i;n+1)]$) des Informationssignals (301-i) zuzuweisen, um jeweils die tatsächlichen Startzeitpunkte ($T[f(i;n)]$) zu erhalten, wobei die zugewiesene Differenzzeitdauer ($\Delta t[f(i;n+1)]$) abhängig ist von einer bevorzugten Differenzzeitdauer ($\Delta t_w[f(i;n+1)]$) des nachfolgenden Zeitschlitzes und einer bevorzugten Differenzzeitdauer ($\Delta t_w[f(i;n)]$) des aktuellen Zeitschlitzes ($B[f(i;n)]$) des Informationssignals.

9. Vorrichtung nach Anspruch 8, wobei der Zeitschlitz-Strukturierer (308) ausgebildet ist, um die Differenzzeitdauer ($\Delta t[f(i;n)]$) eines Zeitschlitzes ($B[f(i;n)]$) eines Informationssignals so zu wählen, dass sie größer ist als eine negative akkumulierte Gesamtverzögerungszeit ($-\Delta T[f(i;n+1)]$) von zeitlich vorhergehenden Zeitschlitzen eines Übertragungszyklus.

10. Vorrichtung nach Anspruch 8 oder 9, wobei der Zeitschlitz-Strukturierer (308) ausgebildet ist, um die Differenzzeitdauer ($\Delta t[f(i;n)]$) eines Zeitschlitzes ($B[f(i;n)]$) eines Informationssignals kleiner als eine maximal mögliche Verzögerungszeit ($\Delta T_{max}[f(i;n)]$) des Zeitschlitzes wählen, wobei die maximal mögliche Verzögerungszeit von einer Größe eines dem Informationssignal zugeordneten Jitterpuffers abhängt.

11. Vorrichtung nach einem der vorhergehenden Ansprüche, wobei der Zeitschlitz-Strukturierer (308) ausgebildet ist, um jede der tatsächlichen Datenraten ($r_{eff}[f(i;n+1)]$) im nachfolgenden Übertragungszyklus jeweils abhängig von dem im nachfolgenden Übertragungszyklus zu übertragenden Informationssignal und Datenratenkosten einzustellen.

12. Vorrichtung nach Anspruch 12, wobei der Zeitschlitz-Strukturierer (308) ausgebildet ist, um jedem der Informationssignale (301-i) einen von den Datenratenkosten (c) abhängigen Wert ($u[.]$) gutzuschreiben, wenn der Zeitschlitz ($B[f(i;n)]$) des Informationssignals (301-i) verkürzt wird, und einen von den Datenratenkosten abhängigen Wert ($u[.]$) abzuziehen, wenn der Zeitschlitz ($B[f(i:n)]$) des Informationssignals verlängert wird.

13. Vorrichtung nach einem der vorhergehenden Ansprüche, wobei es sich bei dem aktuellen und dem nachfolgenden Übertragungszyklus mit den aktuellen und den nachfolgenden Zeitschlitzen jeweils um DVB-H Übertragungszyklen handelt.

14. Verfahren (100) zur Übertragung einer Mehrzahl von Informationssignalen (301-i) gemäß einem zyklischen Zeitmultiplex, mit folgenden Schritten:

Schätzen (102), für jedes der Informationssignale (301-i), einer Datenrate ($r_i[n]$; $r[f(i;n)]$), mit der das jeweilige Informationssignal in einem dem aktuellen Zeitschlitz nachfolgenden Zeitschlitz ($B_i[n+1]$; $B[f(i;n+1)]$) voraussichtlich encodiert wird;
Ermitteln (104), für jedes der Informationssignale (301-i), basierend auf der geschätzten Datenrate ($r_i[n]$; $r[f(i;n)]$), einer relativen Wartezeit (Delta-T), die auf einen geschätzten Startzeitpunkt ($\hat{T}_i[n+1]$) des nachfolgenden Zeitschlitzes ($B_i[n+1]$; $B[f(i;n+1)]$) des Informationssignals hindeutet; und
Zuweisen (106), jedem der nachfolgenden Zeitschlitze ($B_i[n+1]$; $B[f(i;n+1)]$), einen tatsächlichen Startzeitpunkt ($T_i[n+1]$) und eine tatsächliche Datenrate ($r_{eff,i}[n]$; $r_{eff}[f(i;n+1)]$), wobei die tatsächliche Datenrate von einer geschätzten Datenrate abweichen kann,
wobei jeder der tatsächlichen Startzeitpunkte ($T_i[n+1]$) der nachfolgenden Zeitschlitze der größer als oder gleich dem jeweils geschätzten Startzeitpunkt ($\hat{T}_i[n+1]$) ist.

15. Computer-Programm zur Durchführung der Schritte des Verfahrens nach Anspruch 14, wenn das Computer-Programm auf einem Computer und/oder Mikrocontroller abläuft.

<u>100</u>

```
┌─────────────────────────────┐
│   Schätzen der Zeitschlitz-  │
│  struktur für den nachfolgenden │ ──── 102
│        Zeitschlitz          │
└─────────────────────────────┘
              │
              ▼
┌─────────────────────────────┐
│ Ermitteln einer relativen Wartezeit │
│     delta-t für jedes Infosignal    │ ──── 104
│      als Hinweis auf geschätzten    │
│    Startzeitpunkt des Folgebursts   │
└─────────────────────────────┘
              │
              ▼
┌─────────────────────────────┐
│    Zuweisen, dem nachfolgenden      │
│       Übertragungszyklus, eine      │
│     tatsächliche Zeitschlitzstruktur, │ ──── 106
│      wobei tatsächliche Startzeit-  │
│     punkte ≥ geschätzte             │
│          Startzeitpunkte            │
└─────────────────────────────┘
```

# FIG 1

FIG 2

$$T_1[n+1] \geq T_1[n] + \text{Delta} - T_1[n]$$

$$T_2[n+1] \geq T_2[n] + \text{Delta} - T_2[n]$$

$$T_3[n+1] \geq T_3[n] + \text{Delta} - T_3[n]$$

EP 2 230 784 A1

FIG 3

EP 2 230 784 A1

FIG 4

EP 2 230 784 A1

FIG 5

EP 2 230 784 A1

FIG 6

700

Bursts der Services 1-3

R

B_r

| 1 | 2 | 3 | 2 | 3 | 1 | 2 | 3 | 2 | 1 | 3 | 1 |

702    702    ...    ...    704

t

PSI/SI (kein Time Slicing)

FIG 7

Delta - T

sections

FIG 8

EP 2 230 784 A1

$T_L$

Video/Audio

N

N+1

904-(N+1)

900

Raten-analyse/

N

Verarbeitung

904-N

Jitter-puffer

N

N+1

Verarbeitung

N+1

N-1

Encodierung

N

Verarbeitung

N+1

N-1

Jitter-puffer

N

N+1

Burst N-1

Jitter

Burst N

Burst N+1

Delta T

Rate für Burst N bekannt

Bits für Burst N verfügbar

t

$T_{N-1}$

$T_N$

$T_{N+1}$

902-(N-1)

902-(N)

902-(N+1)

FIG 9

**Europäisches Patentamt**
**European Patent Office**
**Office européen des brevets**

## EUROPÄISCHER RECHERCHENBERICHT

Nummer der Anmeldung

EP 09 00 3963

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2007/114862 A2 (QUALCOMM INC [US]) 11. Oktober 2007 (2007-10-11) * Zusammenfassung * * das ganze Dokument * * Abbildungen 2,4 * | 1-15 | INV. H04J3/16 H04N7/24 H04H20/57 |
| A | EP 1 717 974 A2 (SAMSUNG ELECTRONICS CO LTD [KR]) 2. November 2006 (2006-11-02) * Zusammenfassung * * Absatz [0004] - Absatz [0058] * * Abbildungen 3-8 * | 1-15 | |
| A | WO 2008/083827 A2 (FRAUNHOFER GES FORSCHUNG [DE]; UNIV FRIEDRICH ALEXANDER ER [DE]; FORS) 17. Juli 2008 (2008-07-17) * Zusammenfassung * * Seite 1 - Seite 5 * * Seite 27, Zeile 36 - Seite 30, Zeile 33 * * Abbildung 10 * | 1-15 | |
| A | "Digital Video Broadcasting (DVB); DVB-H Implementation Guidelines; ETSI TR 102 377" ETSI STANDARDS, LIS, SOPHIA ANTIPOLIS CEDEX, FRANCE, Bd. BC, Nr. V1.1.1, 1. Februar 2005 (2005-02-01), Seiten 1-30, XP014027140 ISSN: 0000-0001 * das ganze Dokument * | 1-15 | RECHERCHIERTE SACHGEBIETE (IPC) H04J H04N H04H |

Der vorliegende Recherchenbericht wurde für alle Patentansprüche erstellt

| Recherchenort | Abschlußdatum der Recherche | Prüfer |
|---|---|---|
| München | 17. August 2009 | Moser, Jochen |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 00 3963

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-08-2009

| Im Recherchenbericht angeführtes Patentdokument | Datum der Veröffentlichung | Mitglied(er) der Patentfamilie | Datum der Veröffentlichung |
|---|---|---|---|
| WO 2007114862 A2 | 11-10-2007 | CN 101322415 A<br>EP 1955552 A2<br>JP 2009518898 T<br>KR 20080080602 A | 10-12-2008<br>13-08-2008<br>07-05-2009<br>04-09-2008 |
| EP 1717974 A2 | 02-11-2006 | CN 1893328 A<br>JP 2006345493 A<br>KR 20060112159 A<br>US 2006262744 A1 | 10-01-2007<br>21-12-2006<br>31-10-2006<br>23-11-2006 |
| WO 2008083827 A2 | 17-07-2008 | DE 102007001519 A1 | 17-07-2008 |

EPO FORM P0461

Für nähere Einzelheiten zu diesem Anhang : siehe Amtsblatt des Europäischen Patentamts, Nr.12/82